# EUROPÄISCHE PATENTANMELDUNG

(11) **EP 2 147 776 A1**
(43) Veröffentlichungstag der Anmeldung: **27.01.2010**
(21) Anmeldenummer: 08104849.8
(22) Anmeldetag: 23.07.2008
(51) Int. Cl.: B29C 70/22, D04H 3/04, D04H 3/08

(54) **Verfahren zur Herstellung eines Fasergelege-verstärkten Verbundwerkstoffs, sowie Fasergelege-verstärkte Verbundwerkstoffe und deren Verwendung**

(71) Anmelder: SGL Carbon SE, 65203 Wiesbaden (DE)
(72) Erfinder: Öttinger, Oswin, 86405, Meitingen (DE); Gojny, Florian, 86672, Thierhaupten (DE); Kuster, Tobias, 86156, Augsburg (DE)

(57) **Zusammenfassung**

Die vorliegende Erfindung betrifft ein Verfahren zur Herstellung eines Fasergelege-verstärkten Verbundwerkstoffs, welches umfasst: Bereitstellen eines Fasergeleges, welches umfasst, Bereitstellen einer Anordnung von zwei oder mehr Faserlagen, die teilweise oder vollständig übereinander angeordnet sind, wobei eine oder mehrere Faserlagen zu mindestens 50 Gew.-% Fasern ausgewählt aus der Gruppe bestehend aus, Kohlenstofffasern, Vorstufenfasern von Kohlenstofffasern, Keramikfasern und deren Gemischen umfassen, Anbringen mindestens einer Faserlage an einer oder mehreren weiteren Faserlagen mit einem Anbringungsbindefaden, wobei der Anbringungsbindefaden eine oder mehrere Fasern umfasst, ausgewählt aus der Gruppe, bestehend aus Kohlenstofffasern, Kohlenstofffaser-Vorstufenfasern, Keramikfasern und deren Gemischen; Hochtemperatur-Behandeln des Fasergeleges bei einer Temperatur von mindestens 400 °C unter einer inerten Atmosphäre während eines Hocbtemperatur-Bebandlungszeitraums, Imprägnieren des Fasergeleges mit mindestens einem Binder; Härten des imprägnierten Fasergeleges und optional Pressen mindestens eines Oberflächenabschnitts mindestens einer Oberfläche des imprägnierten Fasergeleges vor Beginn und/oder zumindest während eines Teils des Aushärtezeitraums, wobei ein Fasergelege-verstärkter Verbundwerkstoff gebildet wird. Zudem betrifft die vorliegende Erfindung eine Verwendung des Hochtemperatur-behandelten Fasergeleges und von Fasergelege-verstärkten Verbundwerkstoffen.

## Beschreibung

Die vorliegende Erfindung betrifft ein Verfahren zur Herstellung eines Fasergelege-verstärkten Verbundwerkstoffs, sowie Fasergelege-verstärkte Verbundwerkstoffe und deren Verwendung.

Zur Herstellung von Verbundwerkstoffen können Fasern in Form gewobener oder nicht gewobener textiler Strukturen, sowie in Form einzelner, loser Fasern eingesetzt werden. Eine Verwendung von Geweben bietet den Vorteil, dass Fasern auch in großen Mengen und mit einer vergleichsweise gleichmäßigen Verteilung in den Verbundwerkstoff eingebracht werden können. Zudem bietet die Verwendung eines Gewebes den Vorteil, dass die Fasern in dem Gewebe eingebunden vorliegen und üblicherweise keiner weiteren Befestigung aneinander bedürfen. Von Nachteil ist jedoch, dass die Herstellung eines Gewebes mit hohen Kosten verbunden ist, insbesondere wenn empfindliche oder nur schwer verwebbare Fasern verwendet werden.

Fasergelege weisen im Vergleich zu Geweben den Vorteil auf, dass diese üblicherweise bei weitem preisgünstiger herstellbar sind. Gleichzeitig weisen Fasergelege jedoch nur einen sehr schlechten Zusammenhalt auf, was eine Verarbeitung von Fasergelegen, insbesondere im technischen Maßstab stark erschwert. Zur Verbesserung des Zusammenhalts von Fasergelegen können beispielsweise Faserlagen verklebt werden, durch warmschmelzende Bindefäden verknüpft oder verwirkt werden oder durch Nadelung miteinander verbunden werden. Ein Verfahren zur Herstellung eines Verbundwerkstoffs auf Basis einer Faserstruktur unter Verwendung eines chemischen Bindemittels ist beispielsweise in der Patentschrift FR 1 394 271 beschrieben.

Eine Verbindung von Faserlagen durch Nadelung führt jedoch nur zu vergleichsweise gering belastbaren Fasergelegen, während eine Verbindung durch Verklebung oder unter Verwendung warmschmelzender Bindefäden die Gefahr in sich birgt, dass bei höheren Temperaturen ein Zusammenhalt des Fasergeleges in ausreichender Stärke nicht mehr gegeben ist, da der Klebstoff oder die warmschmelzenden Bindefäden schmelzen oder sich zersetzen. Nach einem Schmelzen oder Zersetzen von Klebstoff oder warmschmelzenden Bindefäden können zudem Rückstände auf dem Fasergelege zurückbleiben. Dies ist insbesondere bei einer Herstellung von Verbundwerkstoff in hohen Maße von Nachteil, da derartige Rückstände den Verbund zwischen dem verstärkenden Fasergelege und der Verbundwerkstoffmatrix in beträchtlichem Maße stören können und die Materialeigenschaften des Verbundwerkstoffs, insbesondere dessen Belastbarkeit und Lebensdauer deutlich verringern können.

Im vorliegenden Gebiet der Technik besteht daher ein Bedarf nach der Entwicklung eines weiteren Verfahrens, das die Herstellung von Fasergelege-verstärkten Verbundwerkstoffen erleichtert und bei dem die einzelnen Ausgangsmaterial-Komponenten des Verbundwerkstoffs, nämlich die Fasermaterialkomponenten, die Matrixmaterialkomponente und die Befestigungsmittelkomponenten aufeinander abgestimmt sind.

Beigefügte Figuren zeigen in erläuternder und nicht-einschränkender Weise einen erfindungsgemäßen Fasergelege-verstärkten Verbundwerkstoff und mehrere während des erfindungsgemäßen Verfahrens als Zwischenprodukte hergestellte Fasergelege:
**Fig. 1** zeigt ein Fasergelege (+/-45°-Gelege) mit einer Naht aus Kohlenstofffaser-Vorstufenfaser-Garn.
**Fig. 2** zeigt ein Fasergelege (+/-45°-Gelege) mit einer Naht aus Kohlenstofffaser-Vorstufenfaser-Garn nach Behandlung bei 2000°C.
**Fig. 3** zeigt ein Fasergelege (+/-45°-Gelege) vernäht mit einem Kohlenstofffasergarn nach Graphitierung bei 2000°C.
**Fig. 4** zeigt eine Platte aus Kohlenstofffaser verstärkter Kohlenstoffkeramik hergestellt aus dem in **Fig. 3** gezeigten Produkt.

Aufgabe der vorliegenden Erfindung ist daher die Bereitstellung eines Verfahrens zur Herstellung eines Fasergelege-verstärkten Verbundwerkstoffs, bei dem die Ausgangsmaterial-Komponenten aufeinander abgestimmt sind, und bei dem ein ausreichender und zuverlässiger Zusammenhalt eines Fasergeleges auch während und nach Herstellungsschritten gewährleistet ist, die bei höheren oder sehr hohen Temperaturen, beispielsweise im Bereich von 400 °C bis 2700 °C und darüber, ablaufen. Darüber hinaus sollte ein derartiges Verfahren eine kostengünstige Herstellung eines Fasergeleges und damit des Fasergelege-verstärkten Verbundwerkstoffs ermöglichen. Die Verfahrensschritte eines derartigen Verfahrens, insbesondere die Herstellung des Fasergeleges, sollten zudem bei vergleichsweise hoher Geschwindigkeit ausführbar sein, um auch für eine Herstellung von Fasergelege-verstärkten Verbundwerkstoffen im industriellen Maßstab geeignet zu sein. Darüber hinaus sollten die bei dem erfindungsgemäßen Verfahren in Kontakt kommenden Materialien derart aufeinander abgestimmt sein, dass es nach einem Erhitzen und Abkühlen des Fasergeleges nicht zu einem störenden Verziehen oder Wellen des Fasergeleges und/oder des Fasergelege-verstärkten Verbundwerkstoffs kommt.

Die Aufgabe der vorliegenden Erfindung wird gelöst durch die Bereitstellung eines Verfahrens zur Herstellung eines Fasergelege-verstärkten Verbundwerkstoffs, welches folgende Schritte umfasst: a) Bereitstellen eines Fasergeleges, welches umfasst, Bereitstellen einer Anordnung von zwei oder mehr Faserlagen, die teilweise oder vollständig übereinander angeordnet sind, wobei eine oder mehrere Faserlagen bezogen auf das Gesamtgewicht der jeweiligen Faserlage zu mindestens 50 Gew.-% Fasern, ausgewählt aus der Gruppe bestehend aus, Kohlenstofffasern, Vorstufenfasern von Kohlenstofffasern, Keramikfasern und deren Gemischen umfassen, Anbringen mindestens einer Faserlage an einer oder mehreren weiteren Faserlagen mit einem Anbringungsbindefaden, wobei das Anbringen umfasst, dass der Anbringungsbindefaden durch die mindestens eine Faserlage und durch mindestens eine der einen oder mehreren weiteren Faserlagen hindurchgeführt wird, wobei der Anbringungsbindefaden eine oder mehrere Fasern umfasst, ausgewählt aus der Gruppe, bestehend aus Kohlenstofffasern, Kohlenstofffaser-Vorstufenfasern, Keramikfasern und deren Gemischen; b) Hochtemperatur-Behandeln des Fasergeleges bei einer Temperatur von mindestens 400 °C unter einer inerten Atmosphäre während eines Hochtemperatur-Behandlungszeitraums; c) Imprägnieren des Hochtemperatur-behandelten Fasergeleges mit mindestens einem Binder; d) Härten des imprägnierten Fasergeleges während eines Aushärtezeitraums bei einer Aushärtetemperatur von mindestens 40 °C, und optional Pressen mindestens eines Oberflächenabschnitts mindestens einer Oberfläche des imprägnierten Fasergeleges vor Beginn und/oder zumindest während eines Teils des Aushärtezeitraums, wobei ein Fasergelege-verstärkter Verbundwerkstoff gebildet wird, und e) optional Gewinnen nach dem Schritt des Härtens und optionalen Pressens eines Fasergelege-verstärkten Verbundwerkstoffs oder Verbundwerkstoff produkts.

Weiterhin stellt die vorliegende Erfindung ein Fasergelege gemäß Anspruch 20 bereit. Zudem lehrt die vorliegende Erfindung eine Verwendung von Verbundwerkstoffen, Verbundwerkstoffprodukten und Fasergelegen gemäß Anspruch 21. Bevorzugte Ausführungsformen sind jeweils in den Unteransprüchen angegeben.

Während der zahlreichen Versuche, die zu der vorliegenden Erfindung führten, wurde festgestellt, dass ein erfindungsgemäßes Verfahren die Herstellung eines Fasergelege-verstärkten Verbundwerkstoffs bereitstellt, bei dem aufeinander abgestimmte Materialien verwendet werden, die eine Herstellung eines Verbundwerkstoffs hoher Qualität ermöglichen. Insbesondere gelang bei der vorliegenden Erfindung überraschenderweise die Herstellung eines Verbundwerkstoffs auf Basis eines Fasergeleges, das während des erfindungsgemäßen Herstellungsverfahrens auf Temperaturen von mindestens 400 °C unter einer inerten Atmosphäre erhitzt werden kann und dennoch einen zuverlässigen Zusammenhalt bereitstellt und zudem in einer für ein industrielles Herstellungsverfahren geeigneten Geschwindigkeit gefertigt werden kann. Das erfindungsgemäße Verfahren bietet darüber hinaus den wichtigen Vorteil, dass zur Herstellung von Faserlagen vergleichsweise kostengünstige Seile mit einer hohen Anzahl an Filamenten eingesetzt werden können.

Bei dem erfindungsgemäßen Verfahren erfolgt in einem ersten Schritt ein Bereitstellen eines Fasergeleges, das beispielsweise auch nach einer Behandlung bei einer Temperatur von mindestens 400 °C unter einer inerten Atmosphäre einen zuverlässigen Zusammenhalt bereitstellen kann und bei dem die Materialien derart aufeinander abgestimmt sind, dass sich das Fasergelege nach dieser Hochtemperatur-Behandlung nicht oder nicht wesentlich wellt oder andere unerwünschte Formveränderungen aufweist.

Zum Bereitstellen des Fasergeleges wird in einem ersten Schritt eine Anordnung von zwei oder mehr Faserlagen, die teilweise oder vollständig übereinander angeordnet sind, bereitgestellt, wobei eine oder mehrere der Faserlagen zu mindestens 50 Gew.-% Fasern ausgewählt aus der Gruppe bestehend aus, Kohlenstofffasern, Vorstufenfasern von Kohlenstofffasern, Keramikfasern und deren Gemischen umfassen (bezogen auf das Gesamtgewicht der jeweiligen Faserlage) und auf diese Weise die Herstellung eines hochwertigen und belastbaren Verbundwerkstoffs ermöglichen.

Die Herstellung von Kohlenstofffasern und deren Vorstufenfasern, sowie von Keramikfasern ist einem Fachmann bekannt und ist zudem nachstehend beschrieben.

Der Begriff "Faserlage", wie er in der vorliegenden Anmeldung verwendet wird, umfasst jegliche Lage oder Schicht von Fasern aus beliebigen Materialien oder Materialgemischen. Bei einer Faserlage kann es sich insbesondere um eine unidirektionale Lage oder Einrichtungslage handeln, das heißt eine Faserlage, die beispielsweise eine Vielzahl an Filamenten oder Garnen aufweist, die sich üblicherweise parallel oder im Wesentlichen parallel in eine Richtung erstrecken. Dies kann beispielsweise durch Ausbreiten eines Seils oder ein beliebiges paralleles Anordnen von Filamenten oder Garnen erfolgen. Darüber hinaus umfasst der Begriff Faserlage auch Faserlagen mit beliebiger Anordnung oder beliebigem Verlauf von Filamenten oder Faserabschnitten kürzerer Länge, beispielsweise eine Vlies-Lage. Insbesondere können die Faserlagen auch unterschiedliche Längen-und/oder Breitenabmessungen oder eine unterschiedliche Form aufweisen.

In dem herzustellenden, im erfindungsgemäßen Verfahren eingesetzten Fasergelege können die eine oder die mehreren Faserlagen, die zu mindestens 50 Gew.-% Fasern ausgewählt aus der Gruppe bestehend aus, Kohlenstofffasern, Vorstufenfasern von Kohlenstofffasern, Keramikfasern und deren Gemischen umfassen, jede gewünschte Position innerhalb des Fasergeleges einnehmen und können beispielsweise sowohl, die unterste, als auch die oberste Faserlage und/oder eine zwischen anderen Faserlagen angeordnete Faserlage sein.

Neben Kohlenstofffasern, deren Vorstufenfasern, sowie Keramikfasern können die Faserlagen beliebige Fasern umfassen, die ein Fachmann auf Basis seines allgemeinen Fachwissens und der Lehre der vorliegenden Erfindung auswählen kann.

Fasergelege zur Herstellung von Verbundwerkstoffen mit sehr guten Materialeigenschaften können beispielsweise erhalten werden, wenn mindestens zwei, vorzugsweise mindestens 50 % der Anzahl an Faserlagen, bevorzugt alle Faserlagen des Fasergeleges Fasern umfassen, die ausgewählt sind, aus der Gruppe, bestehend aus Kohlenstofffasern, Vorstufenfasern von Kohlenstofffasern, Keramikfasern und deren Gemischen. Zudem können eine oder mehrere Faserlagen für Verbundwerkstoffe mit sehr guten Materialeigenschaften zu mehr als 70 Gew.-%, vorzugsweise zu mehr als 85 Gew.-%, bevorzugt zu mehr als 92 Gew.-%, insbesondere zu mehr als 98 Gew.-% Fasern, ausgewählt aus der Gruppe bestehend aus, Kohlenstofffasern, Vorstufenfasern von Kohlenstofffasern, Keramikfasern und deren Gemischen umfassen oder vollständig aus diesen bestehen.

Verbundwerkstoffe sehr guter mechanischer Belastbarkeit können erhalten werden, wenn zumindest eine Faserlage eines Fasergeleges Keramikfasern umfasst, vorzugsweise alle Faserlagen Keramikfasern umfassen, beispielsweise in einem Bereich von 0,5 bis 100 Gew.-%, vorzugsweise von 2 bis 99 Gew.-%, jeweils bezogen auf das Gesamtgewicht an Fasern der jeweiligen Faserlage.

In einem weiteren Schritt des erfindungsgemäßen Verfahrens kann zur Bereitstellung eines Fasergeleges ein Anbringen mindestens einer Faserlage an einer oder mehreren weiteren Faserlagen mit einem Anbringungsbindefaden erfolgen. Der Vorgang des Anbringens kann insbesondere umfassen, dass der Anbringungsbindefaden durch die mindestens eine Faserlage und durch mindestens eine der einen oder mehreren weiteren Faserlagen hindurchgeführt wird.

Der Begriff "Anbringen" umfasst auch, dass zunächst nur ein Teil der zu verarbeitenden Faserlagen übereinander angeordnet und aneinander angebracht werden und anschließend weitere Faserlagen an einer oder mehreren Faserlagen dieses zunächst gefertigten Fasergeleges angebracht werden. Zudem umfasst der Begriff "Anbringen" dass zwei, drei oder mehr Fasergelege mit jeweils mehr als einer Faserlage übereinander angeordnet werden und aneinander befestigt werden. Zudem bietet das erfindungsgemäße Verfahren den Vorteil, dass das Fasergelege in einem oder mehreren Abschnitten eine unterschiedliche Anzahl an Faserlagen aufweisen kann. Auf diese Weise kann in Abhängigkeit von dem jeweils abschließend zu fertigenden Produkt, insbesondere eines zu fertigenden Verbundwerkstoffs, die Ausdehnung oder Dicke und die Belastbarkeit des zu fertigenden Produkts gezielt verändert und angepasst werden.

Ein Anbringungsbindefaden kann eine oder mehrere Fasern umfassen, die ausgewählt sind aus der Gruppe, bestehend aus Kohlenstofffasern, Kohlenstofffaser-Vorstufenfasern, keramischen Fasern und deren Gemischen.

Anzumerken ist zudem, dass im Stand der Technik bislang das Vorurteil bestand, dass Bindefäden auf Basis von Materialien mit hoher Sprödigkeit und/oder Zerstörungsanfälligkeit, wie beispielsweise Kohlenstofffasern und deren Vorstufenfasern, sowie Keramikfasern sich nicht für Verfahren eignen, bei denen ein Faden mehrfach bei einem vergleichsweise geringen Biegeradius gebogen wird, insbesondere wenn derartige Verfahren im industriellen Maßstab und bei hoher Produktionsgeschwindigkeit ablaufen, da angenommen wurde, dass der Faden vollständig zerbrechen würde.

Insbesondere können die eine oder mehreren Kohlenstofffaser-Vorstufenfasern des Anbringungsfadens ausgewählt sein, aus der Gruppe, bestehend aus prä-oxidierten Viskosefasern, prä-oxidierten Polyacrylnitril-Fasern, prä-oxidierten Textilfasern, Phenolharzfasern, Pech-basierenden Vorstufenfasern und deren Gemischen. Zudem können die eine oder mehrere Kohlenstofffaser-Vorstufenfasern einer Faserlage, ausgewählt sein, aus der Gruppe, bestehend aus prä-oxidierten Viskosefasern, prä-oxidierten Polyacrylnitril-Fasern, prä-oxidierten Textilfasern, Phenolharzfasern, Pech-basierenden Vorstufenfasern und deren Gemischen. Die Begriffe prä-oxidierte Polyacrylnitril-Faser (üblicherweise häufig auch als PAN-Ox-Faser bezeichnet), Phenolharzfaser, Pech-basierende Vorstufenfaser sind einem Fachmann bekannt und werden nachstehend detailliert erläutert. Der Begriff "Textilfaser" umfasst jegliche einem Fachmann bekannte Textilfaser, insbesondere Textilfasern, die kohlenstoffhaltige Verbindungen umfassen oder aus diesen bestehen.

Die eine oder mehreren Keramikfasern des Anbringungsfadens und/oder die eine oder mehrere Keramikfasern einer Faserlage können ausgewählt sein, aus der Gruppe, bestehend aus, Basaltfasern, Fasern auf Basis von Si, C, B, N, Al oder Verbindungen davon, Glasfasern, Fasern auf Basis von Aluminiumoxid, Fasern auf Basis von Zirkonoxid, Fasern auf Basis von TiC, Fasern auf Basis von WC und deren Gemischen. Vorzugsweise sind die eine oder mehreren Keramikfasern, ausgewählt, aus der Gruppe, bestehend aus, Basaltfasern, Fasern, umfassend oder bestehend aus, SiNC, SiBNC, SiC, B₄C, BN, Si₃N₄, Aluminiumoxid, Zirkonoxid, TiC, WC und deren Gemischen, und Gemische hiervon. Der Begriff "Fasern auf Basis von einem Material", wie er im Rahmen der vorliegenden Erfindung verwendet wird, beschreibt, dass die Fasern aus einem bestimmten Material bestehen oder dieses umfassen können. Die vorstehend genannten Keramikfasern sind einem Fachmann bekannt und werden nachstehend detailliert erläutert.

Anbringungsbindefäden hoher Belastbarkeit können erhalten werden, wenn beispielsweise eine oder mehrere Fasern des Anbringungsbindefadens mindestens eine Verbindung umfassen, die mindestens eines, vorzugsweise zwei oder mehrere der Elemente, ausgewählt aus der Gruppe aus C, Si, N, B, Al, Zr, Ti, W aufweist.

Insbesondere können Anbringungsbindefäden hoher Belastbarkeit, die beispielsweise Keramikfaser(n) umfassen können, erhalten werden, wenn die Summe der Gehalte an C, Si, B, N, Al, Zr, Ti, W mehr als 50 Gew.-%, vorzugsweise mehr als 83 Gew.-%, bevorzugt mehr als 85 Gew.-%, insbesondere mehr als 95 Gew.-% des Gesamtgewichts des Anbringungsbindefadens beträgt, wobei der Gehalt an einem oder mehreren von C, Si, B, N, Al, Zr, Ti, W 0 Gew.-% betragen kann. Der Anbringungsbindefaden kann daher auch lediglich einen Gehalt an einem, vorzugsweise zweien oder mehr von C, Si, B, N, Al, Zr, Ti, W aufweisen. Ein Anbringungsbindefaden kann Glasfaser umfassen oder hieraus bestehen, vorzugsweise umfasst er jedoch nicht mehr als 15 Gew.-%, bevorzugt nicht mehr als 10 Gew.-% an Glasfaser(n), bezogen auf das Gesamtgewicht des Anbringungsbindefadens; insbesondere kann ein Anbringungsbindefaden keine Glasfaser umfassen.

Wenn erwünscht können bei der Anbringung der Faserlagen mehrere Anbringungsbindefäden verwendet werden, welche die gleichen oder unterschiedlichen Fasern umfassen können.

Vorzugsweise umfasst ein Anbringungsbindefaden zu mindestens 15 Gew.-% Faser(n), ausgewählt aus der Gruppe, bestehend aus Kohlenstofffasern, Kohlenstofffaser-Vorstufenfasern, keramischen Fasern und deren Gemischen, jeweils bezogen auf das Gesamtgewicht des Anbringungsbindefadens. Um einen Anbringungsbindefaden sehr guter Belastbarkeit zu erhalten kann es von Vorteil sein, dass der Anbringungsbindefaden zu mindestens 75 Gew.-%, vorzugsweise mindestens 85 Gew.-%, bevorzugt mindestens 96 Gew.-%, insbesondere mindestens 98 Gew.-%, weiter insbesondere mindestens 99 Gew.-% oder vollständig aus Faser(n), ausgewählt aus der Gruppe, bestehend aus Kohlenstofffaser-Vorstufenfasern, keramischen Fasern, Kohlenstofffasern, und deren Gemischen, besteht, jeweils bezogen auf das Gesamtgewicht des Anbringungsbindefadens.

Als Anbringungsbindefäden können beispielsweise 1K-Filamente, Garne, insbesondere Kohlenstofffasergarne mit niedrigem Metergewicht, beispielsweise in einem Bereich von 0,05 bis 0,12 g/m, oder Kohlenstofffaser-Stapelfasergarn mit niedrigem Metergewicht, beispielsweise in einem Bereich von 0,04 Tex bis 1 Tex verwendet werden.

Als optionale Bestandteile kann ein Anbringungsbindefaden weiterhin beispielsweise beliebige von einem Fachmann auf Basis seines allgemeinen Fachwissens wählbare organische Polymere umfassen, beispielsweise Polyacrylnitril, wobei die Polymere insbesondere in Form von Fasern vorliegen können, sowie beispielsweise Metalle, insbesondere in Form von Metallfäden - oder garnen, Zusatzmittel umfassen. Derartige optionale Bestandteile kann ein Fachmann auf Basis seines allgemeinen Fachwissens und der Lehre der vorliegenden Beschreibung auswählen.

Ein Anbringungsfaden kann eine Feinheit beispielsweise von nicht mehr als 1 Tex oder vorzugsweise eine Feinheit im Bereich von 0,04 bis 1 Tex, bevorzugt eine Feinheit im Bereich von 0,04 bis 0,75 Tex aufweisen, bestimmt nach DIN 60905.

Das erfindungsgemäße Verfahren stellt insbesondere den Vorteil bereit, dass Anbringungsbindefäden verwendet werden können, die sich bei einem Erhitzen vollständig oder im Wesentlichen vollständig zu Kohlenstoff und/oder Gemischen oder Verbindungen, die zwei oder mehr von C, Si, N, B, Al, Zr, Ti, W enthalten, vorzugsweise zu Gemischen oder Verbindungen, die Silizium und Kohlenstoff enthalten, umwandeln können, das heißt von denen beispielsweise nach einem Erhitzen auf eine Temperatur von 1000 °C nach einer Stunde unter einer 99,9 Gew.-% an Stickstoff umfassenden Atmosphäre (bezogen auf das Gesamtgewicht der Atmosphäre) ein Material zurückbleibt, bei dem die Summe der Gehalte an C, Si, N, B, Al, Zr, Ti, W, vorzugsweise an Kohlenstoff und/oder Silizium, mindestens 90 Gew.-%, vorzugsweise mindestens 93 Gew.-% beträgt, bezogen auf das Gesamtgewicht des nach dem Erhitzen zurückbleibenden Anbringungsbindefadens, wobei der Gehalt an einem oder mehreren von C, Si, N, B, Al, Zr, Ti, W auch 0 Gew.-% betragen kann.

Als Anbringungsbindefaden kann insbesondere ein hochtemperaturbeständiger Bindefaden verwendet werden. Der Begriff "hochtemperaturbeständiger Bindefaden", wie er in der vorliegenden Erfindung verwendet wird, umfasst jeglichen Faden, der eine Einwirkung einer Temperatur von 405 °C unter einer 99,9 Gew.-% an Stickstoff umfassenden Atmosphäre, bezogen auf das Gesamtgewicht der Atmosphäre, während einer Zeitspanne von 8 Stunden übersteht, ohne vollständig zu schmelzen oder sich vollständig unter Bildung von Zersetzungsrückständen ohne Fadenform, beispielsweise in Form eines Pulvers, zu zersetzen. Vorzugsweise kann ein in hohem Maße hochtemperaturbeständiger Bindefaden verwendet werden, das heißt jeglicher Faden, der bei einer Einwirkung einer Temperatur von 410 °C unter einer 99,9 Gew.-% an Stickstoff umfassenden Atmosphäre, bezogen auf das Gesamtgewicht der Atmosphäre, während einer Zeitspanne von 8 Stunden einen Masseverlust von nicht mehr als 60 Gew.-% aufweist, bezogen auf das Gesamtgewicht des Fadens vor dem Erhitzen. Bevorzugt kann ein in sehr hohem Maße hochtemperaturbeständiger Bindefaden verwendet werden, das heißt jeglicher Faden, der bei einer Einwirkung einer Temperatur von 600 °C unter einer 99,9 Gew.-% an Stickstoff umfassenden Atmosphäre, bezogen auf das Gesamtgewicht der Atmosphäre, während einer Zeitspanne von 8 Stunden einen Masseverlust von nicht mehr als 60 Gew.-% aufweist, bezogen auf das Gesamtgewicht des Fadens vor dem Erhitzen. Weiter bevorzugt kann ein in besonders hohem Maße hochtemperaturbeständiger Bindefaden verwendet werden, das heißt jeglicher Faden, der bei einer Einwirkung einer Temperatur von 900 °C unter einer 99,9 Gew.-% an Stickstoff umfassenden Atmosphäre, bezogen auf das Gesamtgewicht der Atmosphäre, während einer Zeitspanne von 8 Stunden einen Masseverlust von nicht mehr als 60 Gew.-% aufweist, bezogen auf das Gesamtgewicht des Fadens vor dem Erhitzen. Insbesondere kann ein äußerst hochtemperaturbeständiger Bindefaden verwendet werden, das heißt jeglicher Faden, der bei einer Einwirkung einer Temperatur von 2000 °C unter einer 99,9 Gew.-% an Stickstoff umfassenden Atmosphäre, bezogen auf das Gesamtgewicht der Atmosphäre, während einer Zeitspanne von 8 Stunden einen Masseverlust von nicht mehr als 60 Gew.-% aufweist, bezogen auf das Gesamtgewicht des Fadens vor dem Erhitzen. Die 99,9 Gew.-% an Stickstoff umfassende Atmosphäre besteht unter Vorbehalt von Verunreinigungen mit einem Gehalt von nicht mehr als 0,01 Gew.-%, bezogen auf das Gesamtgewicht der Atmosphäre, vorzugsweise weiterhin aus Stickstoff, Edelgasen, Sauerstoff, und Kohlenstoffoxiden, bevorzugt aus Stickstoff und Edelgasen.

Besonders vorteilhafte erfindungsgemäße Fasergelege und Verbundwerkstoffe können erhalten werden, wenn als Anbringungsbindefaden ein Bindefaden verwendet wird, der nach einem Erhitzen auf 400 °C, vorzugsweise 410 °C, bevorzugt 600 °C, weiter bevorzugt 900 °C, insbesondere 2000 °C unter einer 99,9 Gew.-% an Stickstoff umfassenden Atmosphäre, bezogen auf das Gesamtgewicht der Atmosphäre, insbesondere nach einem Erhitzen während einer Zeitspanne von 8 Stunden bei dieser Temperatur, eine Zugfestigkeit von mindestens 5 MPa, vorzugsweise von mindestens 10 MPa, bevorzugt von mindestens 120 MPa, weiter bevorzugt von mindestens 200 MPa, insbesondere von mindestens 400 MPa aufweist. Die Zugfestigkeit kann gemäß ASTM D3379-75 ermittelt werden. Zudem ist im nachstehenden Methoden-Teil ein bevorzugtes Verfahren zur Erfassung der Zugfestigkeit detailliert erläutert.

Überraschenderweise zeigte es sich bei den zahlreichen Versuchen, die zu der vorliegenden Erfindung führten, dass die erfindungsgemäß zur Herstellung des Fasergeleges verwendeten Anbringungsbindefäden entweder sowohl vor, als auch nach einem Erhitzen auf die bei der Herstellung des Verbundwerkstoffs angewandten Temperaturen eine zufriedenstellende Zugfestigkeit zeigen. Besonders überraschend und vorteilhaft ist, dass bei einer Verwendung von Anbringungsbindefäden, die aus Vorstufenfasern von Kohlenstofffasern, beispielsweise präoxidiertem Polyacrylnitril (PAN-Ox), bestehen oder dieses umfassen, die Zugfestigkeit nach einem Erhitzen, beispielsweise auf Temperaturen von beispielsweise bis zu 2000° oder mehr, zunimmt. Anbringungsbindefäden, die eine oder mehrere Fasern, ausgewählt aus der Gruppe, bestehend aus Vorstufenfasern von Kohlenstofffasern, Kohlenstofffasern und deren Gemische umfassen oder aus diesen bestehen, führen daher zu erfindungsgemäßen Fasergelegen und Verbundwerkstoffen mit sehr guten Materialeigenschaften.

Neben einem Anbringungsbindefaden kann zudem optional auch ein Ergänzungsbindefaden verwendet werden, der aus einem beliebigen einem Fachmann bekannten Material gefertigt ist, beispielsweise ein Faden auf Basis von Polyacrylnitril. Möglich ist beispielsweise, dass ein Abschnitt mit einem Anbringungsbindefaden, insbesondere auf Basis von thermisch belastbarem Material, und ein oder mehrere Abschnitte mit einem Ergänzungsbindefaden angebracht werden. Der Begriff "Bindefaden", wie nachstehend verwendet, umfasst sowohl Anbringungsbindefäden, als auch Ergänzungsbindefäden.

Bei einem Bindefaden kann es sich beispielsweise um ein Garn handeln, insbesondere um ein Garn gemäß DIN 60900. Das Garn kann eine oder mehrere Fasern umfassen und kann einen beliebigen, einem Fachmann bekannten Garnaufbau aufweisen. Beispielsweise kann ein Einfachgarn oder ein gefachtes Garn, insbesondere ein Zwirn, der zwei oder mehr zusammengedrehte Garne umfasst, verwendet werden. Vorteilhaft kann es beispielsweise sein, wenn der Zwirn mindestens zwei gegenläufig verdrehte Garne umfasst, da ein derartiger Zwirn in geringerem Maße zusammengedrückt werden kann, insbesondere, wenn das Fasergelege zur Herstellung eines Verbundwerkstoffs verwendet wird. Zudem kann es sich bei einem Bindefaden beispielsweise um einen oder mehrere Multifilamentstränge handeln, wobei ein Multifilamentstrang vorzugsweise eine Feinheit im Bereich von 0,04 bis 1 Tex, bevorzugt eine Feinheit im Bereich von 0,04 bis 0,75 Tex aufweisen kann, bestimmt nach DIN 60905.

Zudem kann sowohl Stapelfasergarn, als auch Filamentgarn oder deren Gemische als Bindfaden, sowohl als Anbringungsbindefaden, als auch als Ergänzungsbindefaden eingesetzt werden.

Der Begriff "Stapelfasergarn", wie er im Rahmen der vorliegenden Erfindung verwendet wird, bezeichnet Garn, das aus endlich langen, beispielsweise 1 bis 50 mm, vorzugsweise 6 bis 20 mm, bevorzugt 8 bis 15 mm langen Fasern aufgebaut ist. Beispielsweise kann aus diesen Fasern durch ein Verdrehen mehrerer Fasern beim Spinnen ein Garn beliebiger Länge erhalten werden. Der Begriff "Filamentgarn", wie er im Rahmen der vorliegenden Erfindung verwendet wird, bezeichnet Garn, das aus theoretisch unendlich langen Fasern, so genannten Filamenten, aufgebaut ist.

Zudem kann ein Anbringungsbindefaden beispielsweise neben einem Garn, das Kohlenstofffaser(n) und/oder Kohlenstoff-Vorstufenfaser(n) und/oder Keramikfaser(n) umfasst, optional ein Garn auf Basis eines anderen Materials enthalten, wobei das Garn beispielsweise ein organisches Polymer umfasst, insbesondere beispielsweise Polyacrylnitril oder Viskose. Weiterhin kann ein Anbringungsbindefaden in Kombination mit einem benachbart verlaufenden oder mit dem Anbringungsbindefaden verdrehten Ergänzungsbindefaden verwendet werden. Auch Kombinationen von zwei oder mehr Anbringungsbindefäden sind möglich.

Das Anbringen der mindestens einen Faserlage an einer oder mehreren weiteren Faserlagen mit einem Anbringungsbindefaden, erfolgt indem der Anbringungsbindefaden durch die mindestens eine Faserlage und die eine oder mehreren weiteren Faserlagen hindurch geführt wird.

Das Hindurchführen des Anbringungsbindefadens kann durch verschiedene einem Fachmann bekannte Vorgehensweisen erfolgen, beispielsweise durch Nähverfahren und/oder Strickverfahren und/oder Häkelverfahren. Diese Vorgehensweisen können gegebenenfalls auch von einem Fachmann auf Basis seines allgemeinen Fachwissens an das erfindungsgemäße Verfahren angepasst werden.

Bei einigen Anwendungen kann es vorteilhaft sein, den Anbringungsbindefaden durch Lücken oder Abstände in der Faserlage, beispielsweise zwischen Filamenten, durchzuführen. Vorzugsweise wird der Anbringungsbindefaden jedoch durch die Faserlage, beispielsweise unter Durchstechen dieser, beispielsweise mit einer Nadel, durchgeführt.

Sehr vorteilhaft ist, wenn das Anbringen durch ein Vernähen der mindestens einen Faserlage an einer oder mehreren weiteren Faserlagen erfolgt, da auf diese Weise eine sehr sichere und zuverlässige, sowie in hohem Maße belastbare Verbindung der jeweiligen Faserlagen erreicht werden kann.

Ein Vernähen kann beispielsweise mit Industrienähmaschinen, die von einem Fachmann auf Basis seines allgemeinen Fachwissens und der Lehre der vorliegenden Erfindung ausgewählt werden können, erfolgen. Nadel und Sticharten können von einem Fachmann auf Basis seines allgemeinen Fachwissens ausgewählt werden. Ein Vernähen kann dabei einseitig oder beidseitig erfolgen. Bei einem Vernähen unter Verwendung eines Ober- und eines Unterfadens, das heißt eines im Wesentlichen unter dem Fasergelege und eines im Wesentlichen über dem Fasergelege geführten Fadens kann mindestens einer von diesen, vorzugsweise können beide ein Anbringungsbindefaden sein.

Der Schritt des Anbringens kann umfassen, dass der Anbringungsbindefaden bei einer ersten Eintrittsstelle in eine erste Faserlage eintritt, durch die erste Faserlage und mindestens eine weitere Faserlage hindurchgeführt wird und bei einer ersten Austrittsstelle auf der mindestens einen weiteren Faserlage austritt, und optional bei einer zweiten Eintrittsstelle auf der mindestens einen weiteren Faserlage eintritt und durch die mindestens eine weitere Faserlage und die erste Faserlage hindurchgeführt wird und bei einer zweiten Austrittsstelle auf der ersten Faserlage austritt.

Weiter optional kann der Anbringungsbindefaden bei einer dritten Eintrittsstelle auf der ersten Faserlage nochmals eintreten, durch die erste Faserlage und mindestens eine weitere Faserlage hindurchgeführt werden und bei einer dritten Austrittsstelle auf der mindestens einen weiteren Faserlage austreten, und bei einer vierten Eintrittsstelle auf der mindestens einen weiteren Faserlage eintreten und durch die mindestens eine weitere Faserlage und die erste Faserlage hindurchgeführt werden und bei einer vierten Austrittsstelle auf der ersten Faserlage austreten. Dieser vorstehend beschriebene Vorgang des Durchführens des Anbringungsbindefadens kann noch mehrmals wiederholt werden.

Vorzugsweise kann bei einigen Anbringungsverfahren eine oder vorzugsweise jede zweite Austrittsstelle, beispielsweise die erste, dritte, fünfte Austrittsstelle, und die nachfolgende Eintrittsstelle, beispielsweise die zweite, vierte, sechste Eintrittsstelle, räumlich zusammenfallen oder einen Abstand von weniger als 3 mm aufweisen. Die Eintritts- und Austrittsstellen auf einer Faserlage können jedoch auch zumindest teilweise jeweils räumlich beabstandet sein.

Im fertigen Fasergelege kann eine Eintrittsstelle, beispielsweise die erste Eintrittsstelle, und die korrespondierende Austrittsstelle, beispielsweise die erste Austrittsstelle, im Wesentlichen senkrecht übereinander liegen, vorzugsweise sind sie um weniger als 5 mm versetzt. Bei einigen Anbringungsverfahren kann jedoch der Anbringungsbindefaden schräg durch das Fasergelege geführt werden, so dass eine Eintrittsstelle und die korrespondierende Austrittsstelle nicht im Wesentlichen senkrecht übereinander vorliegen.

Ein Bereich des Fasergeleges, der sich zwischen Eintritts- und Austrittsstellen eines Anbringungsbindefadens erstreckt, wird im Rahmen der vorliegenden Erfindung als Anbringungsabschnitt, und im Falle eines Anbringens durch Vernähen, als Naht bezeichnet.

Weiterhin kann ein Anbringungsbindefaden zumindest vor dem Anbringen zumindest teilweise, vorzugsweise vollständig, von einem Anbringungsfluid, beispielsweise einer Schlichte, umhüllt sein. Ohne dass die vorliegende Erfindung auf die Richtigkeit der nachstehenden Annahme beschränkt wäre, wird angenommen, dass das teilweise oder vollständige Umhüllen des Anbringungsbindefaden mit einem Anbringungsfluid dazu beiträgt, die Befestigung von Faserlagen mit einem hochtemperaturbeständigen und damit vergleichsweise empfindlichen und/oder spröden Material bei noch weiter gesteigerter Geschwindigkeit durchzuführen. Dies ermöglicht eine Arbeits- und Produktionszeiteinsparung, so dass Fasergelege und damit Fasergelege-verstärkte Verbundwerkstoffe den Verbrauchern kostengünstiger bereitgestellt werden können.

Ein Anbringungsfluid kann beispielsweise in Form einer Flüssigkeit, einer Lösung, einer Suspension, eines fließfähigen Gemisches oder Aerosols bereitgestellt werden.

Beispielsweise kann das Anbringungsfluid eine oder mehrere Verbindungen, ausgewählt aus der Gruppe, bestehend aus, Wasser, Silikonölen, Polyurethanen, Epoxidharzverbindungen, beispielsweise Epoxyestern, Polyvinylalkoholen, Wachsen, Fettsäureestern, Polyurethanestern, Polyurethanethern, hiervon abgeleitete Derivate, sowie Gemische hiervon, umfassen oder hieraus bestehen. Zudem kann das Anbringungsfluid optional Lösungsmittel, beispielsweise anorganische oder organische Lösungsmittel, Basen, Säuren, Puffergemischen, Lubrikationsmittel, Dispergiermittel und andere optionale Komponenten, die ein Fachmann auf Basis seines allgemeinen Fachwissens und der Lehre der vorliegenden Erfindung auswählen kann, umfassen. Vorzugsweise handelt es sich bei dem Anbringungsfluid um ein wässriges Gemisch.

Um eine in hohen Maße belastbare Befestigung zu erreichen, kann es vorteilhaft sein, dass sich ein Anbringungsabschnitt, beispielsweise eine Naht, schräg verlaufend oder im Wesentlichen senkrecht, das heißt unter einem Winkel von mindestens 10°, vorzugsweise mindestens 30°, bevorzugt etwa 80° bis 90° zu einem Rand, vorzugsweise dem in Längsrichtung des Fasergeleges verlaufenden Längsrand, des Fasergeleges erstreckt.

Ein Anbringungsabschnitt, beispielsweise eine Naht, kann über seine ganze Länge aus Anbringungsbindefaden oder aus Ergänzungsbindefaden hergestellt sein oder optional zumindest einen Abschnitt aufweisen, bei dem statt eines Anbringungsbindefadens ein Ergänzungsbindefaden oder keinerlei Bindefaden verwendet wird.

Vorteilhaft für die Herstellung eines Fasergeleges kann es sein, Anbringungsbindefaden und Ergänzungsbindefaden in einem Gewichtsverhältnis von 20:1 bis 1:30, vorzugsweise 3:1 bis 1:15, bevorzugt 2:1 bis 1:7, jeweils bezogen auf das Gesamtgewicht an Anbringungsbindefäden und Ergänzungsbindefäden, die in dem Fasergelege vorliegen, zu verwenden.

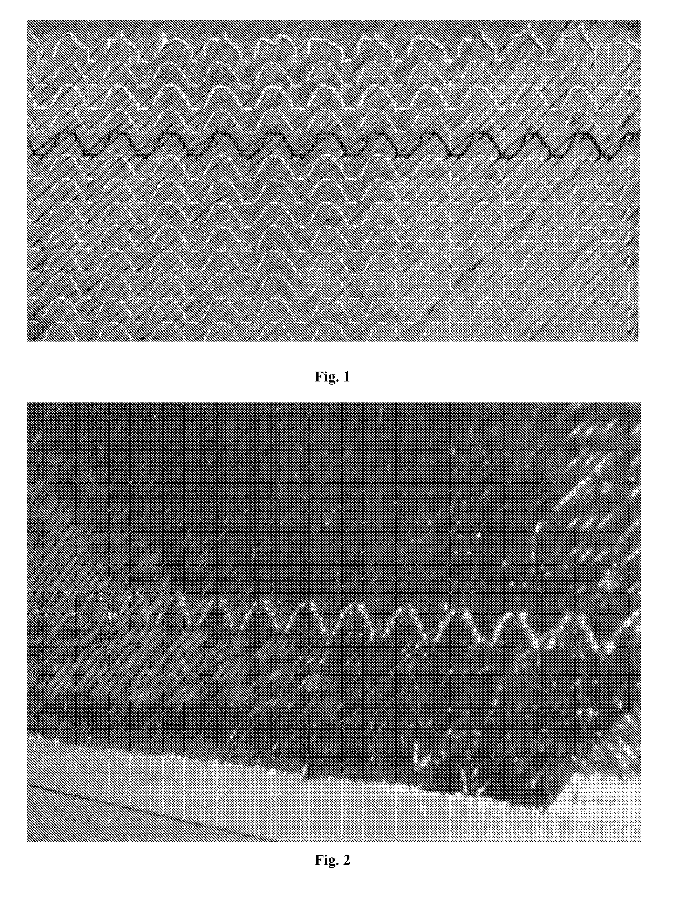

Eine mögliche, vorteilhafte Anordnung von Anbringungsbindefaden und Ergänzungsbindefaden ist in Fig. 1 gezeigt, worin auf einen Anbringungsabschnitt (Naht) aus Anbringungsbindefaden mehrere Anbringungsabschnitte (Nähte) aus Ergänzungsbindefaden folgen.

Anbringungsabschnitte aus Anbringungsbindefaden und Anbringungsabschnitte aus Ergänzungsbindefaden können auf Basis des allgemeinen Fachwissens unter Berücksichtigung der Lehre der vorliegenden Erfindung auf zahlreiche Weisen angeordnet werden und sich beispielsweise auch überschneiden oder überlappen. Bei zahlreichen Anwendungen kann es von Vorteil sein, wenn ein oder mehrere Anbringungsabschnitte aus Anbringungsbindefaden und Anbringungsabschnitte aus Ergänzungsbindefaden im Wesentlichen parallel zueinander verlaufen.

Nach dem Anbringen der mindestens einen weiteren Faserlage an der ersten Faserlage mit einem Anbringungsbindefaden wird ein Fasergelege gewonnen. Vorzugsweise kann es sich um ein multiaxiales Fasergelege handeln. Der Begriff "multiaxiales Fasergelege", wie er im Rahmen der vorliegenden Erfindung verwendet wird, beschreibt ein Fasergelege, das mindestens zwei unidirektionale Lagen (auch Einrichtungslagen genannt) umfasst, deren jeweilige Längsrichtungen nicht parallel zueinander verlaufen. Verfahren zur Herstellung von unidirektionalen Lagen sind einem Fachmann bekannt und werden zudem nachstehend detailliert erläutert.

In dem nächsten Verfahrensschritt wird das Fasergelege einer Hochtemperatur-Behandlung unterworfen, um ein Fasergelege zu erhalten, das vorteilhafte Eigenschaften als Verstärkung in Verbundwerkstoffen aufweist. Während einer derartigen Hochtemperatur-Behandlung kann beispielsweise eine Carbonisierung oder Graphitierung der Kohlenstofffasern oder deren Vorstufenfasern, die in Faserlagen und/oder in einem Bindefaden vorliegen, erfolgen. Faserlagen und/oder Bindefäden, oder Teilbereiche von Faserlagen, die aus Kohlenstofffaser(n) oder deren Vorstufenfaser(n) bestehen, können nach einer derartigen Behandlung einen Kohlenstoffgehalt von mehr als 90 Gew.-%, vorzugsweise von mehr als 92 Gew.-%, bevorzugt von 95 Gew.-% oder mehr, bezogen auf das Gesamtgewicht der Faserlage, des Bindefadens oder Teilbereichs der Faserlagen, aufweisen.

Die Temperaturbehandlung des Fasergeleges kann bei einer Temperatur von mindestens 400 °C, vorzugsweise 405 °C bis 2700 °C, bevorzugt 500 °C bis 2500 °C, weiter bevorzugt 600 °C bis 2000 °C, insbesondere 600 °C bis 900 °C und/oder 1600 °C bis 2000 °C unter einer inerten Atmosphäre erfolgen.

Der Begriff "inerte Atmosphäre" umfasst im Rahmen der vorliegenden Erfindung jegliche Atmosphäre, die frei von Sauerstoff ist oder einen Gehalt an Sauerstoff von weniger als 5 Gew.-%, vorzugsweise von weniger als 1 Gew.-%, bevorzugt von weniger als 0,2 Gew.-%, weiter bevorzugt von weniger als 0,1 Gew.-%, insbesondere von weniger als 0,001 Gew.-%, bezogen auf das Gesamtgewicht der Atmosphäre, aufweist. Eine bevorzugte inerte Atmosphäre weist beispielsweise einen Gehalt von mindestens 99,9 Gew.-% an Stickstoff und/oder Edelgas(en), bezogen auf das Gesamtgewicht der Atmosphäre, auf. Die Atmosphäre mit einem Gehalt von mindestens 99,9 Gew.-% an Stickstoff und/oder Edelgas(en) besteht unter Vorbehalt von Verunreinigungen mit einem Gehalt von nicht mehr als 0,01 Gew.-%, bezogen auf das Gesamtgewicht der Atmosphäre, vorzugsweise weiterhin aus Stickstoff, Edelgasen, Sauerstoff, und Kohlenstoffoxiden, bevorzugt aus Stickstoff und Edelgasen. Zudem kann als "inerte Atmosphäre" auch ein Atmosphäre verwendet werden, die einen Druck von weniger als 1 atm aufweist, d.h. eine Atmosphäre, die nach einer teilweisen oder vollständigen Evakuierung des die Atmosphäre beinhaltenden Behälters erhalten wurde. Die inerte Atmosphäre kann vorteilhafterweise Stickstoff und/oder Edelgase umfassen.

Die Hochtemperaturbehandlungszeitspanne kann beispielsweise mindestens 5 Minuten, vorzugsweise 1 Stunde bis 24 Stunden, bevorzugt 2,5 bis 12 Stunden, insbesondere 3,5 bis 9 Stunden andauern.

Nach Abschluss der Hochtemperatur-Behandlung wird ein Hochtemperatur-behandeltes Fasergelege gewonnen. In diesem Fasergelege sind die Faserlagen zumindest teilweise noch mit einem Anbringungsfaden aneinander angebracht.

In einem weiteren, anschließenden Schritt des erfindungsgemäßen Verfahrens kann das Hochtemperatur-behandelte Fasergelege mit einem Binder imprägniert werden, wobei zunächst ein imprägniertes Fasergelege erhalten wird, dessen Imprägnierung noch nicht ausgehärtet ist. Dieses imprägnierte Fasergelege wird im Rahmen der vorliegenden Erfindung auch als Prepreg bezeichnet.

Der Binder kann ein oder mehrere Harze und/oder ein oder mehrere anorganische Imprägniermittel umfassen, sowie ein oder mehrere Lösungsmittel, beispielsweise Wasser, sowie Graphit und/oder Ruß, sowie weitere Zusatzstoffe, die ein Fachmann auf Basis seines allgemeinen Fachwissens und der Lehre der vorliegenden Beschreibung auswählen kann.

Harze, die sich in besonderem Maße zur Imprägnation von Fasergelegen eignen, sind beispielsweise Phenol-Harze, Epoxid-Harze, Benzoxazin-Harze, Cyanatester-Harze, Polyester-/Vinylester-Harze, Furanharze, Polyimidharze, Polyacrylatharze, daraus abgeleitete Derivate und deren Gemische.

Zur Imprägnierung des Fasergeleges können zudem anorganische Imprägniermittel verwendet werden, wobei sich zur Imprägnierung von Fasergelegen beispielsweise flüssiges Silizium, SiC-Precursor-Polymere, insbesondere Silazane, SiC-Precursor-Oligomere und deren Gemische in besonderem Maße eignen.

Der Begriff "SiC-Precursor-Polymer", wie er im Rahmen der vorliegenden Erfindung verwendet wird, beschreibt jegliche Verbindung mit einer Molekülmasse von mehr als etwa 300 g/mol, die Silizium, sowie Kohlenstoff und/oder Stickstoff umfasst, und beispielsweise einen Gehalt von 10 bis 99 Gew.-% an Si, bezogen auf das Gesamtgewicht der Verbindung, aufweisen kann. Der Begriff "SiC-Precursor-Oligomer", wie er im Rahmen der vorliegenden Erfindung verwendet wird, beschreibt jegliche Verbindung, die Silizium, sowie Kohlenstoff und/oder Stickstoff umfasst, mindestens zwei Siliziumatome aufweist und eine Molekülmasse von bis zu einschließlich etwa 300 g/mol hat, und beispielsweise einen Gehalt von 10 bis 99 Gew.-% an Si, bezogen auf das Gesamtgewicht der Verbindung, aufweisen kann. Vorzugsweise wandelt sich ein SiC-Precursor-Polymer oder ein SiC-Precursor-Oligomer bei einem Erhitzen auf eine Temperatur von mehr als 150°C unter einer inerten Atmosphäre zumindest teilweise in SiC um.

Bei einer Imprägnierung von Fasergelegen können beispielsweise sehr gute Ergebnisse erhalten werden, wenn mindestens eine Verbindung, ausgewählt aus der Gruppe, bestehend aus, Oligosilazanen, Polysilazanen, Oligocarbosilazanen, Polycarbosilazanen, Oligosilanen, Polysilanen, Oligoborocarbosilazanen, Polyborocarbosilazanen, Methyl-Oligosiloxanen, Methyl-Polysiloxanen, Oligocarbosilanen, Polycarbosilanen, Oligoborosilazanen, Polyborosilazanen, Oligo(dialkyl)-silikonen, Poly(dialkyl)silikonen, Oligosiloxanen, Polysiloxanen, beispielsweise Poly(dialkyl)siloxanen, wie Poly(dimethyl)siloxanen, beispielsweise Poly(diaryl)siloxanen, wie Poly(diphenyl)siloxanen, beispielsweise Poly(monoalkyl-monoaryl)siloxanen, wie Poly(monomethyl-monophenyl)siloxanen, deren Derivate und Gemische hiervon verwendet werden. Die Begriffe Oligosilazane, Oligocarbosilazane, Oligosilane, Oligoborocarbosilazane, Methyl-Oligosiloxane, Oligocarbosilane, Oligoborosilazane, Oligo(diallcyl)silikone, Oligosiloxane, etc. umfassen jegliches unter den jeweiligen Begriff fallende Oligomer, das mindestens aus zwei Monomereinheiten aufgebaut ist, das heißt jegliches Oligomer, beginnend ab einem Dimer bis hin zu Verbindungen mit einem Molekulargewicht bis einschließlich etwa 300 g/mol.

Die Begriffe Polysilazane, Polycarbosilazane, Polysilane, Polyborocarbosilazane, Methyl-Polysiloxane, Polycarbosilane, Polyborosilazane, Poly(dialkyl)silikone, Polysiloxane, etc. umfassen jegliches unter den jeweiligen Begriff fallende Polymer, das ein Molekulargewicht von mehr als etwa 300 g/mol aufweist.

Ein Fasergelege kann zudem sowohl mit anorganischen Imprägniermitteln, als auch mit Harzen, vorzugsweise Kunstharzen, imprägniert werden. Beispielsweise können benachbarte Abschnitte eines Fasergeleges mit einem oder mehreren anorganischen Imprägniermitteln und/oder mit einem oder mehreren Harzen imprägniert werden. Beispielsweise kann zudem ein Imprägnieren in mehreren Schichten oder in einer Folge von Imprägniervorgängen mit einem oder mehreren anorganischen Imprägniermitteln und/oder mit einem oder mehreren Harzen erfolgen und/oder ein Imprägnieren unter Verwendung von Gemischen von einem oder mehreren anorganischen Imprägniermitteln und Harzen vorgenommen werden. Die Wahl der Bedingungen des Härtens berücksichtigt die Erfordernisse des gewählten Imprägniermittels.

In einem weiteren Verfahrensschritt kann ein Härten des imprägnierten Fasergeleges erfolgen, wonach ein gehärteter Fasergelege-verstärkter Verbundwerkstoff gewonnen wird, insbesondere ein Verbundwerkstoff, der eine zumindest teilweise mit dem Fasergelege verstärkte Matrix aufweist. Wenn die Imprägnierung zumindest teilweise oder vollständig mit einem oder mehreren organischen Harzen erfolgt ist, so wird nach dem Härten eine Matrix umfassend oder bestehend aus ausgehärtetem Kunststoff erhalten, wobei der gewonnene Verbundwerkstoff üblicherweise auch als Faser-verstärkter Kunststoff bezeichnet wird. Im Falle eines Kohlenstofffaser-Geleges oder eines Geleges, das zumindest teilweise Kohlenstofffasern umfasst, wird ein Kohlenstofffaser-verstärkter Kunststoff (CFK) gewonnen. Bei einer Imprägnierung mit einem oder mehreren anorganischen Imprägniermitteln wird nach dem Härten eine Matrix aus zumindest teilweise vernetzten, anorganischen Imprägniermittel gewonnen.

Das Härten des imprägnierten Fasergeleges kann in einem Aushärtungstemperaturbereich von mindestens 40°C, bei einer Aushärtungstemperatur im Bereich von 50 bis 260 °C, vorzugsweise 80 bis 200 °C erfolgen. Das Aushärten kann vorzugsweise vor Beginn und/oder zumindest während eines Teilzeitraums des Aushärtungszeitraums unter Druck, beispielsweise durch Pressen mindestens eines Oberflächenabschnitts mindestens einer Oberfläche des imprägnierten Fasergeleges mit einem Presswerkzeug erfolgen. Der Aushärtezeitraum kann beispielsweise mindestens 1 Minute, vorzugsweise zwischen 10 Minuten und 8 Stunden, bevorzugt zwischen 15 Minuten und 3 Stunden betragen. Der Zeitraum des Aushärtens unter Druck kann beispielsweise in einem Bereich von mindestens 1 Minute, vorzugsweise zwischen 10 Minuten und 8 Stunden, bevorzugt zwischen 15 Minuten und 3 Stunden liegen. Der Pressdruck kann beispielsweise mindestens 0,01 MPa, vorzugsweise 0,01 MPa bis 100 MPa betragen.

Der Gehalt an Binder, bezogen auf das Gesamtgewicht des nicht-imprägnierten Fasergeleges, kann in einem Bereich von 10 bis 90 Gew.-%, vorzugsweise von 30 bis 70 Gew.-%, bevorzugt von 35 bis 50 Gew.-% liegen. Der Gehalt an Harz und/oder anorganischem Imprägniermittel, bezogen auf das Gesamtgewicht des nicht-imprägnierten Fasergeleges, kann in einem Bereich von 5 bis 85 Gew.-%, vorzugsweise von 25 bis 65 Gew.-%, bevorzugt von 30 bis 45 Gew.-% liegen.

Das Fasergelege kann beispielsweise bis zur Sättigung des Fasergeleges getränkt werden. Insbesondere können Flüssigharze oder geschmolzene Harze ("hot melt resin"), bei denen es sich beispielsweise um Phenolharze handeln kann, zur Anwendung kommen.

Die Verfahrensschritte des Härtens und des Imprägnierens können unter Anwendung jeglicher einem Fachmann hierfür bekannter Verfahren ausgeführt werden. Sehr vorteilhafte Ergebnisse können erhalten werden, wenn die Imprägnierung durch Eintauchen in ein Tauchbad oder mit einem Film-Transfer-Verfahren erfolgt. Beispielsweise können diese Verfahrensschritte kontinuierlich ausgeführt werden, das heißt das Gewebe kann beispielsweise von einer Rolle abgerollt werden, durch einen oder mehrere Öfen mit einer geeigneten Temperatur und Atmosphäre, wie beispielsweise von 400 °C oder mehr unter einer inerten Atmosphäre, geführt werden und anschließend weiter durch ein Harzbad und/oder ein Bad mit anorganischem Imprägniermittel, und/oder einen Walzenkalander und/oder eine andere Imprägniereinrichtung geführt werden. Im Anschluss kann ein Härten erfolgen, wobei ein Verbundwerkstoff gewonnen wird, dessen Matrix durch ein Fasergelege, beispielsweise ein Kohlenstofffasergelege, verstärkt ist. Der Verfahrensschritt des Aushärtens kann sowohl kontinuierlich oder diskontinuierlich ausgeführt werden. Das ausgehärtete Harz und/oder das ausgehärtete anorganische Imprägniermittel erfüllt in dem nach dem Härten gewonnenen Verbundwerkstoff mehrere Funktionen. Zunächst stellt das Harz Verbindungen zwischen den Seilen und Fäden des Fasergeleges her und fixiert ihre Lage im Gewebe. Je nach Verbundwerkstoff-Anwendung kann das Fasergelege vollständig oder abschnittsweise in einer gehärtetes Harz und/oder anorganisches Imprägniermittel umfassenden Matrix eingebettet sein, und/oder vollständig oder abschnittsweise mit einem lediglich einzelne Fasern bedeckenden Film aus Harz und/oder anorganischem Imprägniermittel überzogen sein und/oder abschnittsweise frei von Harz sein. Der ausgehärtete Binder bewirkt zudem eine mechanische Verstärkung des Fasergeleges.

Nach dem Schritt des Härtens und/oder Pressens kann ein Fasergelege-verstärkter Verbundwerkstoff oder ein Fasergelege-verstärktes Verbundwerkstoffprodukt gewonnen werden.

Als Fasergelege-verstärktes Verbundwerkstoffprodukt wird im Rahmen der vorliegenden Anmeldung ein teilweise oder vorzugsweise vollständig ausgehärteter Fasergelege-verstärkter Verbundwerkstoff bezeichnet, der optional weiteren Verarbeitungsschritten, beispielsweise einem Zuschneiden, einer spanenden Formgebung, etc. unterworfen wurde. Im Rahmen der vorliegenden Anmeldung wird ein gehärteter Fasergelege-verstärkter Verbundwerkstoff zudem auch als Grünkörper bezeichnet.

Optional kann der teilweise oder vollständig ausgehärtete Fasergelege-verstärkte Verbundwerkstoff, auch ohne dazwischen geschalteten Schritt des Gewinnens, oder das teilweise oder vollständig ausgehärtete Fasergelege-verstärkter Verbundwerkstoffprodukt weiteren Verfahrensschritten, wie u.a. einer thermischen Behandlung, beispielsweise zur Carbonisierung oder Graphitierung, oder einem weitergehenden Erhitzen und/oder Pressen unterworfen werden.

In einem weiteren Verfahrensschritt kann eine thermische Behandlung erfolgen, bei der eine teilweise oder vollständige Carbonisierung und/oder Graphitierung des ausgehärteten Binders erfolgt. Dieser Verfahrensschritt kann grundsätzlich nach jeglichem einem Fachmann hierfür bekannten Verfahren erfolgen und wird nachstehend auch als "Bindermatrix-Carbonisierung" oder "Bindermatrix-Graphitierung" bezeichnet. Der Begriff "teilweise oder vollständige Carbonisierung (Graphitierung) des ausgehärteten Binders", wie er im Rahmen der vorliegenden Erfindung verwendet wird, beschreibt, dass der Gehalt an Kohlenstoff in einem Verbundwerkstoff Probestück, das einer thermischen Behandlung unter teilweiser oder vollständiger Carbonisierung (Graphitierung) unterzogen wurde, verglichen mit dem Verbundwerkstoff-Probestück vor der thermischen Behandlung, angestiegen ist.

Eine thermische Behandlung kann in einem ersten Temperaturbereich (häufig auch als "Carbonisierung" bezeichnet) erfolgen und kann beispielsweise durch ein Erhitzen unter Ausschluss oxidierend wirkender Substanzen, d. h. entweder unter inerter Atmosphäre, Schutzgas oder unter Umhüllen des zu brennenden Gutes mit einem als Getter wirkenden, die oxidierend wirkenden Medien, speziell Sauerstoff bindenden Stoff bei einer Temperatur oder in einem Temperaturbereich im Bereich von etwa 800 °C bis etwa 1250 °C, bevorzugt von 850 °C bis 950 °C, insbesondere von 880 °C bis 920 °C, erfolgen. Die thermische Behandlung im ersten Temperaturbereich kann während einer Zeitspanne von beispielsweise mindestens 30 Minuten, vorzugsweise von mindestens 8 Stunden, insbesondere von 30 Minuten bis 96 Stunden erfolgen. Der Begriff "inerte Atmosphäre" wurde bereits vorstehend erläutert. Zur thermischen Behandlung in einem ersten Temperaturbereich ("Carbonisierung") kann im Rahmen der Lehre der vorliegenden Erfindung jegliches einem Fachmann bekannte Verfahren verwendet werden, beispielsweise eine Festphasenpyrolyse. Um eine gute Koksausbeute zu erreichen, kann zuvor eine Aufheizphase, beispielsweise mit einem vergleichsweise geringen Temperaturgradienten im Bereich von 300 bis 600 °C von maximal 4 °C pro Stunde, ausgeführt werden oder es wird unter Druck verkokt. Die Endtemperatur bei diesem Verfahrensschritt kann beispielsweise 1250°C nicht überschreiten.

Der thermischen Behandlung in einem ersten Temperaturbereich kann sowohl ein vollständig, als auch ein nur teilweise ausgehärteter Fasergelege-verstärkter Verbundwerkstoff unterzogen werden. Nach thermischer Behandlung im ersten Temperaturbereich wird ein Verbundwerkstoff gewonnen, dessen Matrix Kohlenstoff umfasst und mit einem Kohlenstofffasergewebe verstärkt ist ("Kohlenstofffaser-verstärkter Kohlenstoff", CFC).

Alternativ zu der thermischen Behandlung im ersten Temperaturbereich oder zusätzlich zu dieser, insbesondere nach dieser, kann eine thermische Behandlung in einem zweiten Temperaturbereich (häufig auch als "Graphitierung" bezeichnet) erfolgen. Die thermische Behandlung in einem zweiten Temperaturbereich ("Graphitierung") kann durch jegliches einem Fachmann hierfür bekannte Verfahren erfolgen. Insbesondere kann ein Erhitzen in einer inerten Atmosphäre bei einer Temperatur im Bereich von etwa 1251 °C bis 3000 °C, bevorzugt von 1800 °C bis 2200 °C während einer Zeitspanne von beispielsweise mindestens etwa 30 Minuten, vorzugsweise von mindestens 8 Stunden, insbesondere von 30 Minuten bis 96 Stunden erfolgen. Der Begriff "inerte Atmosphäre" wurde bereits vorstehend erläutert.

Bei einer thermischen Behandlung im ersten und/oder zweiten Temperaturbereich schrumpft die Harzschicht infolge des Gewichtsverlusts durch die Abspaltung flüchtiger Bestandteile. Der nach der thermischen Behandlung gewonnene Verbundwerkstoff zeichnet sich durch eine hohe Temperaturbeständigkeit aus.

Nach dem thermischen Behandeln des Fasergelege-verstärkten Verbundwerkstoffs oder Verbundwerkstoffprodukts kann ein thermisch behandelter(s) Fasergelege-verstärkter(s) Verbundwerkstoff oder Verbundwerkstoffprodukt gewonnen werden. Optional können Bearbeitungsschritte ausgeführt werden, beispielsweise ein Zuschneiden oder eine spanabhebende Formgebung, etc.

Optional kann der nach einer oder mehreren thermischen Behandlungen in einem ersten und/oder zweiten Temperaturbereich erhaltene Verbundwerkstoff, insbesondere ein Kohlenstofffaser-verstärkten Kohlenstoff umfassender Verbundwerkstoff, zusätzlich ein- oder mehrmals einer Nachbehandlung, insbesondere einer Nachverdichtung, unterzogen werden, bei welcher der Verbundwerkstoff mindestens einmal imprägniert, insbesondere mit einem carbonisierbaren Mittel imprägniert, und/oder mindestens einmal erneut einer thermischen Behandlung in einem ersten und/oder zweiten Temperaturbereich (die üblicherweise auch als Nachbrand bezeichnet wird) unterworfen wird. Die Nachverdichtung, insbesondere die Schritte des Imprägnierens und thermischen Behandelns, können im Rahmen der Lehre der vorliegenden Erfindung grundsätzlich nach jedem einem Fachmann hierfür bekannten Verfahren erfolgen. Der Begriff Nachverdichtung, wie er im Rahmen der vorliegenden Erfindung verwendet wird, bezeichnet jede Behandlung eines Materials oder Werkstücks, das zu einer Aufrechterhaltung oder Erhöhung der Dichte des behandelten Materials oder Werkstücks führt. Vorteilhafterweise kann durch eine derartige Nachbehandlung eine Erhöhung der Dichte erfolgen. Die Imprägnierung und die thermische Behandlung können dabei insbesondere vorteilhaft unter den vorstehend und nachstehend erläuterten Bedingungen erfolgen. Für das Imprägnieren kann beispielsweise die so genannte Vakuum-Druck-Methode verwendet werden.

Als Imprägniermittel können alle für ein Imprägnieren von Teilen, die Kohlenstoff umfassen oder hieraus bestehen, bekannten Stoffe, beispielsweise Stoffe mit einer Koksausbeute von mehr als 30 Gewichtsprozent, beispielsweise Kunstharze, insbesondere duroplastische Harze oder Peche und daraus abgeleitete Derivate, sowie Gemische aus Harzen und Pechen und/oder Pech-Derivaten verwendet werden. Insbesondere können Phenolharze des Novolak oder Resoltyps, Furanharze oder Imprägnierpeche Verwendung finden. Eine thermische Behandlung in einem ersten und/oder zweiten Temperaturbereich, wie vorstehend definiert, nach dem Imprägnieren, das so genannte Nachbrennen, erfolgt unter Ausschluss oxidierend wirkender Substanzen, insbesondere unter einer inerten Atmosphäre. Vor und/oder nach der thermischen Behandlung in einem ersten und/oder zweiten Temperaturbereich kann ein Aufheizen oder Abkühlen von beispielsweise 8 bis 10 Stunden, beispielsweise auf Raumtemperatur (20 °C), erfolgen. Beispielhafte und bevorzugte Zeitspannen und Temperaturbereiche für eine thermische Behandlung in einem ersten und/oder zweiten Temperaturbereich sind vorstehend detailliert erläutert. Bei diesem Verfahrensschritt soll eine oder es sollen mehrere zusätzliche Kohlenstoffhüllen auf die bereits vorhandene Hülle aufgebracht werden und es sollen nach dem ersten Carbonisierungsschritt in der ersten Hülle noch vorhandene Risse und Poren geschlossen werden. Je nach beabsichtigter Schutzwirkung für die Fasern kann dieser Imprägnier- und Nachbrennvorgang auch mehrmals, vorzugsweise 1 bis 3 mal erfolgen.

Anwendungsspezifisch kann für eine Optimierung des Verbundwerkstoffs vorteilhaft sein, einer thermischen Behandlung in einem ersten Temperaturbereich, bei der eine Carbonisierung erfolgen kann, noch eine thermische Behandlung in einem zweiten Temperaturbereich unter einer inerten Atmosphäre, bei der eine Graphitierung erfolgen kann, nachzuschalten. Die Durchführung einer solchen Maßnahme ist jedoch lediglich optional. Zumeist wird die Endtemperatur 3000 °C, insbesondere 2400 °C beim Graphitieren nicht überschritten. Vorzugsweise wird bei Temperaturen von 1800 bis 2200 °C gearbeitet. Für diesen Schritt können alle bekannten Graphitierungsverfahren angewandt werden.

Die vorstehend beschriebene Nachverdichtung, die zunächst ein Imprägnieren und dann einen Brennvorgang umfasst, kann ein oder mehrmals wiederholt werden.

Die Anzahl der durchzuführenden Nachverdichtungen ist abhängig von der gewünschten Zieldichte der Kohlenstofffaser verstärkten Kohlenstoffkeramik, und kann ein oder mehrmals, beispielsweise zwei, drei oder vier mal oder mehr, vorzugsweise in unmittelbar aufeinander folgender Weise durchgeführt werden. Vorzugsweise werden die Schritte des Imprägnierens und nachfolgenden Brennens jeweils dreimal ausgeführt. Nach Nachverdichtung können beispielsweise Dichten von 1,30 - 1,60 g/cm³, vorzugsweise von 1,30 - 1,55 g/cm³ erreicht werden.

Weiterhin kann optional der nach einer oder mehreren thermischen Behandlungen erhaltene und/oder zudem wie vorstehend erläutert nachverdichtete, Fasergelege-verstärkte Kohlenstoff umfassende Verbundwerkstoff zudem einer Gasphasen-Beschichtung nach dem CVD-Verfahren (CVD = Chemical Vapor Deposition) oder nach dem CVI-Verfahren (CVI = Chemical Vapor Infiltration) mit Schutzschichten aus hochschmelzenden Stoffen wie Pyrokohlenstoff, TiC, TiN oder SiC versehen werden. Im Rahmen der vorstehenden Erfindung kann jegliches einem Fachmann bekannte CVD-/ CVI-Verfahren zur Anwendung kommen. CVD-/CVI-Verfahren werden beispielsweise in der Schrift DE 39 33 039 A1 oder in der Veröffentlichung E. Fitzer et. al., Chemie-Ingenieur-Technik 57, Nr. 9, S. 737-746 (1985) gelehrt.

Darüber hinaus kann optional der nach einer thermischen Behandlung in einem ersten und/oder zweiten Temperaturbereich erhaltene und/oder zudem wie vorstehend erläutert nachverdichtete und/oder zudem nach dem CVD-Verfahren oder nach dem CVI-Verfahren beschichtete, Kohlenstofffaser-verstärkten Kohlenstoff umfassende Verbundwerkstoff einer Silizierung unterzogen werden. Ein derartiges Verfahren wird beispielsweise in der Veröffentlichung E. Fitzer et. al., Chemie-Ingenieur-Technik 57, Nr. 9, S. 737-746 (1985) gelehrt.

Eine Silizierung kann im Rahmen der vorliegenden Erfindung gemäß jeglichem einem Fachmann bekannten Verfahren ausgeführt werden. Verbundwerkstoffe besonders hoher Qualität können beispielsweise erhalten werden, wenn das Silizieren im Temperaturbereich von 1450 °C bis 2200 °C, vorzugsweise im Temperaturbereich von 1650 °C bis 1750 °C unter einer inerten Atmosphäre durchgeführt wird. Insbesondere kann im Temperaturbereich von 1650 °C bis 1750 °C unter Vakuum gearbeitet werden. Nach Erreichen der Silizierungstemperatur kann die Zeitspanne für das Infiltrieren und Reagieren zu SiC mindestens 10 Minuten, beispielsweise 10 Minuten bis 1 Stunde betragen. Im Falle eines Silizierens ohne Anwendung von Vakuum kann insbesondere bei Temperaturen von 2100 °C bis 2200 °C unter inerter Atmosphäre siliziert werden. Die Summe von Infiltrier- und Reaktionszeit kann auch bei einem Silizieren ohne Anwendung von Vakuum mindestens 10 Minuten, beispielsweise zwischen 10 Minuten und einer Stunde, betragen. Vorteilhafterweise können die vorstehend geschilderten Silizierungen unter Verwendung der sogenannten Dochttechnik erfolgen. Hierbei liegen die Körper, die siliziert werden sollen, auf porösen, bezogen auf das Silizium sehr saugfähigen Kohlenstoffkörpern, deren unterer Teil in flüssigem Silizium steht. Das Silizium steigt dann durch diese Dochtkörper in die zu silizierenden Körper, ohne dass letztere direkte Verbindung mit dem Siliziumbad haben.

Die vorstehend erläuterten Schritte des Nachverdichtens, insbesondere durch Imprägnierung und optionalen, anschließenden thermischen Behandeln in einem ersten und/oder zweiten Temperaturbereich, des Silizierens und des Gasphasenbeschichtens können jeweils ein oder mehrmals wiederholt werden und in beliebiger Reihenfolge miteinander kombiniert werden.

Verbundwerkstoffe mit besonders hoher Qualität können beispielsweise erhalten werden, wenn nach dem Schritt des Härtens und optional Pressens des imprägnierten Fasergeleges und einer thermischen Behandlung im ersten Temperaturbereich, bei der eine Carbonisierung stattfinden kann, die vorstehend beschriebenen Schritte des Imprägnierens und thermischen Behandelns in einem ersten und/oder zweiten Temperaturbereich, durch die eine Nachverdichtung erreicht werden kann, mindestens einmal, vorzugsweise ein bis dreimal, bevorzugt dreimal ausgeführt werden. Optional kann anschließend zudem eine Silizierung oder ein Gasphasenbeschichten oder eine Silizierung gefolgt von einem Gasphasenbeschichten ausgeführt werden. Das Gasphasenbeschichten kann insbesondere mit Kohlenstoff oder Kohlenstoff umfassenden Gemischen, mittels eines CVD- oder CVI-Verfahrens, wie vorstehend beschrieben, erfolgen.

Gemäß einem weiteren Aspekt stellt die vorliegende Erfindung ein Fasergelege bereit, das nach einem Verfahren erhältlich ist, welches umfasst: a) Bereitstellen eines Fasergeleges, welches umfasst, Bereitstellen einer Anordnung von zwei oder mehr Faserlagen, die teilweise oder vollständig übereinander angeordnet sind, wobei eine oder mehrere Faserlagen zu mindestens 50 Gew.-% Fasern ausgewählt aus der Gruppe bestehend aus, Kohlenstofffasern, Vorstufenfasern von Kohlenstofffasern, Keramikfasern und deren Gemischen umfassen, Anbringen mindestens einer Faserlage an einer oder mehreren weiteren Faserlagen mit einem Anbringungsbindefaden, wobei das Anbringen umfasst, dass der Anbringungsbindefaden durch die mindestens eine Faserlage und durch mindestens eine der einen oder mehreren weiteren Faserlagen hindurchgeführt wird, wobei der Anbringungsbindefaden eine oder mehrere Fasern umfasst, ausgewählt aus der Gruppe, bestehend aus Kohlenstofffasern, Kohlenstofffaser-Vorstufenfasern, Keramikfasern und deren Gemischen, und b) Hochtemperatur-Behandeln des Fasergeleges bei einer Temperatur von mindestens 400 °C unter einer inerten Atmosphäre während eines Hochtemperatur-Behandlungszeitraums.

Gemäß einem weiteren Aspekt stellt die vorliegende Erfindung eine Verwendung eines erfindungsgemäßen Fasergelege-verstärkten Verbundwerkstoffs oder Verbundwerkstoffprodukts und/oder eines erfindungsgemäßen thermisch behandelten Fasergelege-verstärkten Verbundwerkstoffs oder Verbundwerkstoffprodukts und/oder eines erfindungsgemäßen nachverdichteten und/oder silizierten und/oder gasphasenbeschichteten Fasergelege-verstärkten Verbundwerkstoffs oder Verbundwerkstoffprodukts oder eines erfindungsgemäßen Fasergeleges zur Herstellung von Öfen, insbesondere Hochtemperaturöfen, die für ein Erhitzen des Heizraums auf Temperaturen von beispielsweise mindestens 800 °C, vorzugsweise mindestens 1100°, insbesondere mindestens 2000 °C ausgelegt sind, insbesondere zur Herstellung der Innenauskleidung oder Heizbereichauskleidung derartiger Öfen, zur Herstellung von Heizleitern, zur Herstellung von chemischen Reaktionsvorrichtungen, zur Herstellung von Bauelementen für chemische Reaktionsvorrichtungen, sowie zur Herstellung von Heißpressmatrizen, bereit.

Sehr vorteilhafte Produkte, die erfindungsgemäßen Fasergelege-verstärkten Verbundwerkstoff und/oder thermisch behandelten und/oder nachverdichteten und/oder silizierten und/oder gasphasenbeschichteten Fasergelege-verstärkten Verbundwerkstoff umfassen oder aus diesem bestehen sind u.a. hochtemperaturbelastbare Elemente und Vorrichtungen, beispielsweise Öfen, deren Innenauskleidung oder Heizbereichsauskleidung, Heizleiter, chemische Reaktionsvorrichtungen, Bauelemente für chemische Reaktionsvorrichtungen, sowie Heißpressmatrizen.

Eine Faserlage, die zu einem sehr vorteilhaften, da sehr regelmäßigen Fasergelege führt, ist eine so genannte Einrichtungslage oder unidirektionale Lage.

Zur Herstellung einer unidirektionalen Lage können ein oder mehrere Seile verwendet werden, die ausgebreitet werden, um unidirektionale Streifen zu bilden. Die unidirektionalen Streifen können nebeneinander angeordnet werden, um eine unidirektionale Lage zu bilden. Die unidirektionalen Streifen können hierbei unmittelbar aneinander angrenzen, beabstandet sein oder überlappen. Der Begriff "Seil", wie er im Rahmen der vorliegenden Erfindung verwendet wird, umfasst Seile aus beliebigen, von einem Fachmann auswählbaren Materialien.

Fasergelege mit sehr vorteilhaften Eigenschaften können beispielsweise erhalten werden, wenn mindestens eine Faserlage, insbesondere eine unidirektionale Lage, vorzugsweise alle Faserlagen, eine Anzahl an Filamenten aufweisen, die im Bereich von 0,5 K (500 Filamente) bis zu 500 K (500 000 Filamente) liegt. Vorzugsweise liegt die Anzahl an Filamenten einer Faserlage beziehungsweise unidirektionale Lage in einem Bereich von 1 K (1000 Filamente) bis zu 400 K (400 000 Filamente), bevorzugt in einem Bereich von 12 K (12 000 Filamente) bis zu 60 K (60 000 Filamente). Das erfindungsgemäße Verfahren ermöglicht daher sowohl eine Verwendung von Seilen vom leichten Typ ("low tow", in einem Bereich von etwa bis zu 25 K), als auch eine Verwendung von Seilen schweren Typs ("heavy tow", in einem Bereich von etwa ab 25 K). Eine äußerst kostengünstige Herstellung einer Faserlage beziehungsweise unidirektionalen Lage kann bei einer Verwendung von Seilen mit einer Anzahl an Filamenten von mehr als etwa 24 K erhalten werden. Optional kann auch nur ein Teil eines Seils, beispielsweise lediglich die Hälfte der Anzahl an Filamenten eines Seils, ausgebreitet werden.

Der Durchmesser der Filamente mindestens einer Faserlage beziehungsweise unidirektionalen Lage, vorzugsweise aller Faserlagen beziehungsweise unidirektionalen Lagen, kann in einem Bereich beispielsweise von 6 bis 8 µm liegen.

Zudem kann eine einzelne Faserlage beziehungsweise unidirektionale Lage ein flächenbezogenes Gewicht in einem Bereich von beispielsweise 50 g/m² bis 500 g/m², vorzugsweise in einem Bereich von 150 g/m² bis 350 g/m² aufweisen. In Abhängigkeit von dem angestrebten Endprodukt kann es von Vorteil sein, eine oder mehrere Faserlagen beziehungsweise unidirektionale Lagen mit einem flächenbezogenen Gewicht von mindestens 305 g/m² zu wählen.

Bei einer Verwendung von Kohlenstofffasern und/oder deren Vorstufenfasern ergaben sowohl Fasern, die ausgehend von Polyacrylnitril, aber auch ausgehend von Pech oder Phenolharzfasern erhalten wurden, eine Faserlage sehr guter mechanischer Belastbarkeit.

Fasergelege können grundsätzlich gemäß jeglichem einem Fachmann bekannten Verfahren hergestellt werden. Fasergelege mit sehr vorteilhaften Eigenschaften sind Fasergelege, bei denen mindestens eine Faserlage, insbesondere unidirektionale Lage, vorzugsweise alle Faserlagen, insbesondere unidirektionalen Lagen, aus Kohlenstofffasern und/oder deren Vorstufenfasern und/oder Keramikfasern bestehen oder diese umfassen, wobei diese Fasergelege eine Anzahl an Filamenten pro Faserlage oder unidirektionaler Lage in einem Bereich von 1 K (1000 Filamente) bis zu 400 K (400 000 Filamente) oder mehr, bevorzugt in einem Bereich von 12 K (12 000 Filamente) bis zu 60 K (60 000 Filamente), aufweisen können.

Fasergelege mit vorteilhaften Materialeigenschaften und vergleichsweise geringen Herstellungskosten können erhalten, wenn eine oder mehrere Faserlagen, insbesondere unidirektionale Lagen verwendet werden, die Polymerfasern, insbesondere organische Polymerfasern, oder deren Gemische umfassen. Bei einigen Anwendungen kann es sich auch als vorteilhaft erweisen, dass Fasern auf Basis von Polyacrylnitril, Fasern auf Basis von Viskose, zur Herstellung mindestens einer Faserlage verwendet werden. Eine, zwei, drei oder mehrere der Faserlagen können beispielsweise vollständig oder zumindest zu 80 Gew.-% aus Polyacrylnitrilfasern und/oder Viskosefasern bestehen, bezogen auf das Gesamtgewicht an Fasern in der Faserlage.

Vor, während und/oder nach einem Ausbreiten einer Faserlage beziehungsweise unidirektionalen Lage kann diese oder deren Ausgangsmaterialien optional mit einem oder mehreren chemischen Bindemitteln behandelt werden. Dies kann beispielsweise durch Aufsprühen des Bindemittels, durch Eintauchen in ein Bindemittel umfassendes Bad, oder durch Aufsprühen eines warmschmelzbaren oder warmklebenden Polymers erreicht werden. Bei einer Verwendung einer Faserlage, die aus nicht zusammenhängenden Filamenten gebildet ist, kann ein Fachmann, wenn erwünscht, die Filamente einem Vermengen unterziehen und beispielsweise eine unidirektionale Lage vor einem Ausbreiten einem Druckwasserstrahl aussetzen oder eine Nadelung durchführen. Zur Herstellung einer unidirektionalen Lage können Seile einzeln ausgebreitet werden und die erhaltenen unidirektionalen Streifen können optional aneinandergelegt werden, um eine unidirektionale Lage zu bilden. Das Ausbreiten eines oder mehrerer Seile kann dabei unter Verwendung jeglicher einem Fachmann bekannten Vorgehensweise erfolgen, die zudem von einem Fachmann auf Basis der Lehre der vorliegenden Erfindung angepasst und verändert werden kann.

Das erfindungsgemäße Verfahren ermöglicht insbesondere auch die Herstellung eines multiaxialen Fasergeleges, wobei zwei oder mehr unidirektionale Lagen übereinander angeordnet werden können.

Vorgehensweisen zur Ausbreitung von Seilen, sowie zur Herstellung von unidirektionalen Lagen und Fasergelegen und zur Herstellung eines multiaxiales Fasergeleges werden nachstehend erläutert und sind zudem beispielsweise in den Schriften FR-A-2 581 085 und FR-A-2 581 086 beschrieben.

Fasergelege mit unterschiedlichen Materialeigenschaften können erhalten werden, indem Fasergelege hergestellt werden, die zwei, drei, vier, fünf, sechs, sieben, acht oder beliebig mehr Faserlagen und/oder unidirektionale Lagen umfassen. Zum Erzielen von in hohem Maße belastbaren Material kann es vorteilhaft sein, dass sich eine unidirektionale Lage in eine andere Längsrichtung erstreckt, als jeweils die über und/oder unter dieser unidirektionalen Lage angeordnete unidirektionale Lage. Vorzugsweise erstrecken sich alle in einem Fasergelege vorliegenden unidirektionalen Lagen in eine jeweils unterschiedliche Längsrichtung. Vorteilhaft kann es hierbei sein, wenn mindestens die Längsrichtung einer unidirektionalen Lage einen Winkel von mindestens 30°, vorzugsweise mindestens 45°, bevorzugt mindestens 60°, insbesondere 85 - 90° zur Längsrichtung mindestens einer nachfolgenden unidirektionalen Lage bildet.

Wenn die unidirektionalen Lagen jeweils zueinander unterschiedliche Längsrichtungen aufweisen, so werden bei einer Verwendung von zwei unidirektionalen Lagen biaxiale Fasergelege, bei einer Verwendung von drei unidirektionale Lagen triaxiale Fasergelege, bei einer Verwendung von vier unidirektionalen Lagen quadraxiale Fasergelege, gewonnen.

Nachstehend wird eine Herstellung einer unidirektionalen Lage und eines Fasergeleges, insbesondere eines multiaxialen Fasergeleges detaillierter erläutert. Zudem können andere Herstellungsverfahren von einem Fachmann gewählt werden. Während des Seil-Ausbreitens zum Gewinnen einer unidirektionalen Lage kann ein Seil zunächst beispielsweise über eine oder mehrere Vorrichtungen geführt werden, die es ermöglichen die Spannung des Seils zu steuern, sowie anschließend über eine oder mehrere Vorrichtungen zum Ausbreiten des Seils geführt werden, wodurch unidirektionale Streifen erhalten werden. Ein unidirektionaler Streifen kann dann auf einer Vorrichtung mit einem oder mehreren weiteren Streifen zusammengeführt werden und eine unidirektionale Lage ausbilden. Der eine oder die mehreren weiteren Streifen können von Seilen gleichen oder unterschiedlichen Materials stammen. Optional kann eine Faserlage, insbesondere eine unidirektionale Lage, nach ihrer Bildung mit einem Bindemittel behandelt werden. Sowohl Seile, die aus zusammenhängenden, als auch aus unzusammenhängenden Filamenten gebildet sind, sowie Seile mit gemischten Filamenten aus unterschiedlichen Materialien können bei dem erfindungsgemäßen Verfahren verwendet werden.

Mehrere unidirektionale Lagen können dann zu einem Fasergelege, insbesondere einem multiaxialen Fasergelege vereinigt werden. Hierzu können unidirektionale Lagen verwendet werden, die vorzugsweise derart zueinander angeordnet sind, dass zumindest zwei der Längsrichtungen der unidirektionalen Lagen mit einander einen Winkel von mehr als 5° bilden. Die verwendeten unidirektionalen Lagen können die gleiche Breite aufweisen oder auch nicht. Bei der Herstellung eines multiaxialen Fasergeleges wählt ein Fachmann eine Richtung als Referenzrichtung, die als 0°-Richtung bezeichnet wird. Häufig entspricht die 0°-Richtung der Längsrichtung des herzustellenden Fasergeleges. Eine parallel zu dieser Richtung verlaufende unidirektionale Lage wird als 0°-Lage bezeichnet.

Vorzugsweise werden bei einer Verwendung von zwei oder mehr unidirektionalen Lagen die zwei oder mehreren, weiteren unidirektionale Lagen derart angeordnet, dass ihre jeweiligen Längsrichtungen zur 0°-Richtung Winkel mit entgegengesetzten Vorzeichen bilden, wobei der Winkelbetrag gleich (und die Winkel beispielsweise +60° / -60° oder +45° / -45° betragen können) oder unterschiedlich sein kann, oder ihre jeweiligen Längsrichtungen zur 0°-Richtung unter Winkeln von 0° und 90° vorliegen.

Der Begriff "Kohlenstofffaser", wie er im Rahmen der vorliegenden Anmeldung verwendet wird, umfasst jegliche Kohlenstofffaser, die ausgehend von einer kohlenstoffhaltigen Ausgangsmaterialfaser, beispielsweise einer Faser auf Basis von Polyacrylnitril, einer Faser auf Basis von Polyacetylen, einer Faser auf Basis von Polyphenylen, einer Faser auf Basis von Pech, oder einer Faser auf Basis von Cellulose, hergestellt wurde, wobei dieser Begriff insbesondere Fasern, die einen Kohlenstoffgehalt von mehr als 75 Gew.-%, vorzugsweise mehr als 85 Gew.-%, bevorzugt von mehr als 92 Gew.-% aufweisen, jeweils bezogen auf das Gesamtgewicht der Faser, umfassen kann.

Der Begriff "Kohlenstofffaser-Vorstufenfaser", wie er im Rahmen der vorliegenden Anmeldung verwendet wird, umfasst jegliche Faser, aus der eine Kohlenstofffaser hergestellt werden kann und die ausgehend von einer kohlenstoffhaltigen Ausgangsmaterialfaser, für die vorstehend zahlreiche Beispiele angegeben sind, hergestellt wurde, wobei eine "Kohlenstofffaser-Vorstufenfaser" jedoch im Vergleich zur Ausgangsmaterialfaser bereits eine chemische oder mechanische Veränderung, beispielsweise eine Oxidation, erfahren hat. Beispiele für Kohlenstofffaser-Vorstufenfasern sind unter anderem prä-oxidierte Polyacrylnitril-Fasern (häufig als PAN-Ox abgekürzt), prä-oxidierte Viskosefasern, jegliche prä-oxidierten Textilfasern, Phenolharzfasern, Pech-basierende Vorstufenfasern, und deren Gemische, wobei diese Aufzählung nicht als abschließend zu verstehen ist.

Eine als Ausgangsmaterialfaser zur Herstellung von Kohlenstofffasern und Kohlenstofffaser-Vorstufenfasern geeignete Faser ist eine Faser auf Basis von Polyacrylnitril. Zudem kann eine Faser auf Basis von Polyacrylnitril auch als solche zur Herstellung einer Faserlage eingesetzt werden.

Herstellungsverfahren für Polyacrylnitrilfasern, prä-oxidierte Polyacrylnitrilfasern und aus diesen hergestellte Kohlenstofffasern sind beispielsweise in der Veröffentlichung von E. Fitzer, L. M. Manocha, "Carbon Reinforcements and Carbon/Carbon Composites", Springer Verlag, Berlin, 1998, ISBN 3-540-62933-5, S. 10-24, sowie in den Schriften US 4,001,382, US 6,326,451, EP 0 384 299 B1 und US 6,054,214 erläutert.

Ausgangsmaterialfasern für eine Herstellung einer auf Pech basierenden Vorstufenfaser können sowohl isotrope, als auch anisotrope Pechfasern sein. Zur Herstellung derartiger Ausgangsmaterialfasem wird Mesophasen-Pech (mesophase pitch) einem Schmelzspinnverfahren unterzogen und gedehnt, solange er plastisch deformierbar ist, wobei Pech-Fasern mit einer bevorzugten Orientierung hergestellt werden können. Geeignete Herstellungsverfahren für Pech-Fasern und auf Pech-basierenden Vorstufenfaser sind im Stand der Technik bekannt und werden beispielsweise in der Veröffentlichung von E. Fitzer, L. M. Manocha, "Carbon Reinforcements and Carbon/Carbon Composites", Springer Verlag, Berlin, 1998, ISBN 3-540-62933-5, S. 24 - 34, sowie in der Patentschrift DE 697 32 825 T2 erläutert.

Verfahren zur Herstellung von Phenolharzfasern, sowie eine Herstellung von Bindefäden aus diesen Fäden sind einem Fachmann bekannt. Zudem werden derartige Verfahren beispielsweise in den Schriften DE 2 308 827 und DE 2 328 313 beschrieben.

Als Keramikfasern, beispielsweise für Faserlagen oder Anbringungsbindefäden, können beispielsweise oxidische und/oder nicht-oxidische Fasern auf Basis von einer oder mehreren Verbindungen, die mindestens eines, vorzugsweise mindestens zwei der Elemente Kohlenstoff, Silicium, Bor, Titan, Zirkon, Wolfram, Aluminium und Stickstoff umfassen, eingesetzt werden. Vorzugsweise bestehen die Keramikfasern vollständig oder zu mindestens 90 Gew.-% bezogen auf das Gesamtgewicht der Keramikfaser aus Verbindungen, die mindestens zwei der Elemente Kohlenstoff (C), Silicium (Si), Bor (B), Titan (Ti), Zirkon (Zr), Wolfram (W), Aluminium (Al) und Stickstoff (N) umfassen. Insbesondere können Keramikfasern verwendet werden, bei denen die Summe der Gehalte an C, Si, B, N, Al, Zr, Ti, W mehr als 50 Gew.-%, vorzugsweise mehr als 83 Gew.-%, bevorzugt mehr als 85 Gew.-%, insbesondere mehr als 95 Gew.-% des Gesamtgewichts der Keramikfasern beträgt, wobei der Gehalt an einem oder mehreren von C, Si, B, N, Al, Zr, Ti, W 0 Gew.-% betragen kann.

Beispielsweise werden Fasern, insbesondere hochwarmfeste Fasern, auf Basis von Si, C, B, N, Al oder Verbindungen davon (wobei diese Fasern beispielsweise in der Schrift DE 197 11 829 C1 auch als "Si/C/B/N-Fasern" bezeichnet werden), sowie insbesondere Keramikfasern auf Basis von Verbindungen, die mindestens zwei dieser Elemente umfassen, verwendet. Derartige Fasern sind beispielsweise in der Schrift DE 197 11 829 C1 beschrieben.

Keramikfasern können beispielsweise mindestens eine Verbindung ausgewählt unter Aluminiumoxid, Zirkonoxid, SiNC, SiBNC, SiC, B₄C, BN, Si₃N₄, TiC, WC und deren Gemischen umfassen oder hieraus vollständig oder zu mindestens 90 Gew.-%, vorzugsweise zu mindestens 93 Gew.-%, bezogen auf das Gesamtgewicht der Fasern, bestehen. Insbesondere kann es sich bei Keramikfasern um Basaltfasern und/oder Glasfasern oder ein Gemisch hiervon mit weiteren Keramikfasern handeln.

Verfahren zur Herstellung von Basaltfasern, sowie zur Herstellung von Bindefäden aus diesen Fäden sind einem Fachmann bekannt. Zudem werden derartige Verfahren beispielsweise in den Schriften DE 195 38 599 A1, CH 96640 beschrieben.

### Methoden

### a) Gewichtsbestimmung von Fäden

Wenn nicht explizit abweichend angegeben, beziehen sich die Begriffe "Gewicht des Fadens" oder "Gesamtgewicht des Fadens" auf einen trockenen Faden, sowie auf einen Faden vor Aufbringung eines Anbringungsfluids (oder sog. "Schlichte"), wobei die Trocknung unter Verwendung eines dem Fachmann bekannten Trocknungsverfahren erfolgen kann. Vorzugsweise erfolgt eine Trocknung gemäß ISO 1889.

### b) Ermittlung des Masseverlusts eines Fadens beim Erhitzen

Nach Bestimmung des Gewichts eines trockenen Fadens, der wie im vorstehenden Abschnitt a) beschrieben erhalten wurde, bei 20 °C, wird der trockene Faden unter einer inerten Atmosphäre bei einem Druck von 1013 hPa und bei einer Temperatur von 20 °C, wobei die inerte Atmosphäre 99,9 Gew.-% an Stickstoff umfasst, bezogen auf das Gesamtgewicht der inerten Atmosphäre, während 12 Stunden auf eine jeweilige, gewählte Temperatur, wie vorstehend erläutert (im Falle eines hochtemperaturbeständigen Fadens: 405 °C, eines in hohem Maße hochtemperaturbeständigen Fadens: 410 °C, eines in sehr hohem Maße hochtemperaturbeständigen Fadens: 600 °C, eines in besonders hohem Maße hochtemperaturbeständigen Fadens: 900 °C, eines äußerst hochtemperaturbeständigen Fadens: 2000 °C), erhitzt. Nach Erreichen der gewählten Temperatur wurde die Temperatur während 8 Stunden konstant gehalten. Anschließend erfolgte ein Abkühlen während 20 Stunden auf 20 °C.

Nach Abkühlen auf 20 °C wird das jeweilige Gewicht des bei der ausgewählten Temperatur behandelten Fadens bestimmt und mit dem jeweiligen Gewicht des trockenen Fadens vor dem Erhitzen verglichen, und der Masseverlust ermittelt.

### c) Ermittlung der Zugfestigkeit eines Fadens nach einem Erhitzen

Der Faden wird unter einer inerten Atmosphäre bei einem Druck von 1013 hPa und bei einer Temperatur von 20 °C, wobei die inerte Atmosphäre 99,9 Gew.-% an Stickstoff umfasst, bezogen auf das Gesamtgewicht der inerten Atmosphäre, während 12 Stunden auf die jeweilige Zieltemperatur (400 °C, vorzugsweise 410 °C, bevorzugt 600 °C, weiter bevorzugt 900 °C, insbesondere 2000 °C) erhitzt. Nach Erreichen der Zieltemperatur wird die Temperatur während 8 Stunden konstant gehalten. Anschließend erfolgte ein Abkühlen während 20 Stunden auf 20 °C. Die Zugfestigkeit wird nach dem Abkühlen gemäß ASTM D3379-75 ermittelt.

### d) Weitere Methoden

Die Ermittlung der Höchstzugkraft und der Zugfestigkeit ("tensile strength") kann gemäß einem dem Fachmann bekannten Verfahren erfolgen. Insbesondere kann eine Bestimmung nach ASTM D3379-75 erfolgen.

Bei dem Gewicht von Fasern, beispielsweise einer Faserlage, handelt es sich um das Gewicht von trockenen Fasern, wobei die Trocknung unter Verwendung eines dem Fachmann bekannten Trocknungsverfahren erfolgen kann. Vorzugsweise erfolgt eine Trocknung gemäß ISO 1889.

Normen, beispielsweise DIN-, ISO- oder ASTM-Normen, beziehen sich, wenn mehrere Fassungen hiervon vorliegen sollten, auf die am 1.8.08 jeweils aktuelle Fassung.

Die Erfindung wird nun anhand der nachstehenden, nicht beschränkenden Beispiele näher erläutert:

### Beispiele

### Beispiel 1: Herstellung eines Fasergeleges und dessen Weiterverarbeitung

Auf einer multi-axialen Gelegemaschine wurden heavy-tow Kohlenstofffasern mit 50000 Einzelfilamenten der SGL Group, Meitingen, Deutschland, welche die Handelsbezeichnung Sigrafil C30 T050 EPY aufweisen, zu biaxialen Gelegen mit einem Flächengewicht von 450 g/m² verarbeitet. Sigrafil C30-Fasern weisen einen Durchmesser von 6,5 µm, eine Dichte von 1,80 g/cm³, eine Zugfestigkeit von 3,8 GPa (bestimmt nach ASTM D3379-75, "tensile strength"), einen Kohlenstoffgehalt ("carbon content") gemäß ASTM D5291-02 von >95 Gew.-%, bezogen auf das Gesamtgewicht der Faser auf.

Zur Erreichung der erforderlichen thermischen Stabilität des Geleges in dem nachgeschalteten thermischen Prozess, insbesondere der vorstehend erläuterten Hochtemperatur-Behandlung, wurden verschiedene Bindefäden als Anbringungsbindefäden mit hoher thermischer Stabilität verwendet. Hierbei wurden sowohl Gelege mit nur einem Typ Bindefaden, als auch Kombinationen getestet.
**Fig. 1** zeigt exemplarisch ein +/-45°-Gelege (Fasergelege mit unidirektionalen Lagen, wobei die Längsrichtungen der unidirektionalen Lagen zur Längsrichtung des Fasergeleges (0°-Richtung) Winkel von + 45° und -45° bilden) mit einer Musternaht aus Garn aus prä-oxidiertem Polyacrylnitril (PAN-Ox) (Handelsbezeichnung des Garns: Sigrafil Nm25/2, Garnfeinheit: 1,7dtex., erhältlich über SGL Goup, Meitingen, Deutschland). Die Musternaht ist in **Fig. 1** als fünfte Naht von oben, die aus vergleichsweise dunklerem Garn hergestellt ist, erkennbar. Die anderen Nähte sind aus Garn des Stands der Technik, das ein Erhitzen auf 2000°C nicht zerstörungsfrei übersteht, hergestellt.
**Fig. 2** zeigt dasselbe Gelege, nach einem Erhitzen bei 2000 °C während 8 Stunden unter einer inerten Atmosphäre, die zu mindestens 99, 9 Gew.-% Stickstoff umfasst. Der PAN-Ox-Bindefaden hat die Graphitierung mit einer für den nachgeschalteten Imprägnierprozess (Prepregprozess) notwendigen Festigkeit überstanden, während das Garn des Stands der Technik das Erhitzen nicht zerstörungsfrei überstanden hat. Versuche, bei denen ein Erhitzen auf 2200°C durchgeführt wurden, zeigen vergleichbare Ergebnisse. Eine ausreichende Festigkeit der Naht für den nachgeschalteten Imprägnierprozess (Prepregprozess) konnte nachgewiesen werden.
   Vergleichbare Ergebnisse wurden beispielsweise auch erhalten, wenn als Bindefaden ein Stapelfasergarn aus zu Garn versponnenen streckgerissenen, prä-oxidierten Polyacrylnitrilfasern (Handelsbezeichnung des Garns: Sigrafil SPO Nm14/2, erhältlich über SGL Goup, Meitingen, Deutschland) oder ein Kohlenstofffasergarn oder eine Kombination von mindestens zwei Garnen ausgewählt unter Kohlenstofffasergarn, Stapelfasergarn und Garn aus prä-oxidiertem Polyacrylnitril verwendet wurde.

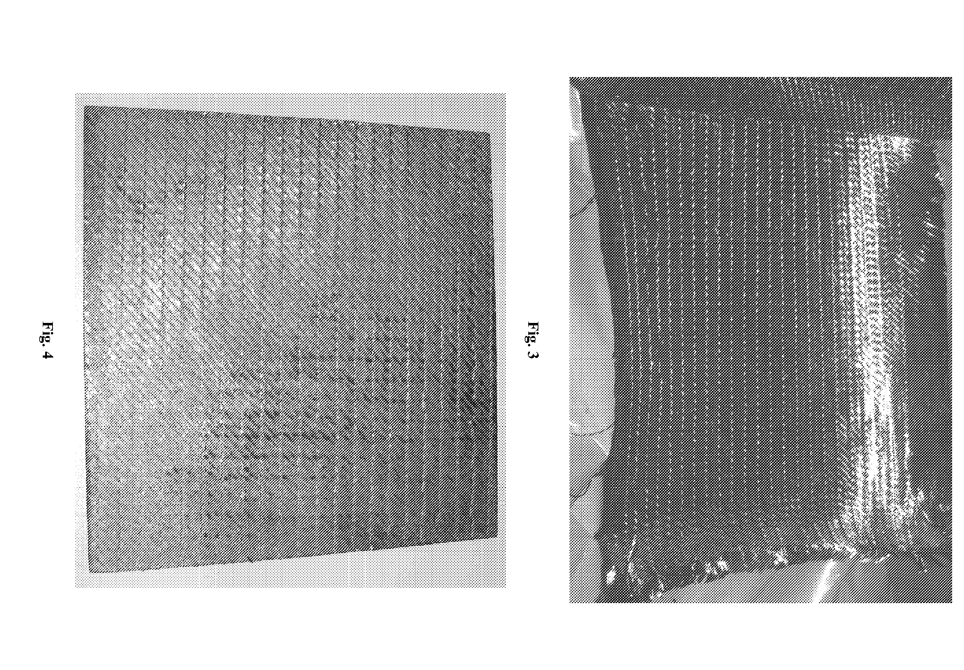

**Fig. 3** zeigt exemplarisch ein graphitiertes, mit Kohlenstofffaser vernähtes +/-45°-Gelege. Das Gelege blieb aufgrund der thermischen Beständigkeit der verwendeten Bindefäden formstabil, so dass diese in einem nachgeschalteten Imprägnierprozess mit Phenolharz als Matrix zu Halbzeugen (Prepregs) weiterverarbeitet werden konnten. Die Graphitierung erfolgte während 8 Stunden bei 2000°C unter einer inerten Atmosphäre, die zu mindestens 99, 9 Gew.-% Stickstoff umfasst.

Die aus den beschriebenen, graphitierten Gelegen hergestellten Prepregs wurden zu Kohlenstofffaser verstärkten Kohlenstoffkeramiken verarbeitet. Hierbei wurde das Prepreg zuerst zu Probeplatten bei Temperaturen von bis zu 180°C über einen Zeitraum von bis zu acht Stunden, besonders bevorzugt bis zu drei Stunden, sowie unter Druck heiß gepresst, wodurch ein Grünkörper erzielt wird. Im vorliegenden Beispiel wurde bei 150 °C über 4 Stunden unter Druck von 10 N/cm² gepresst. Dieser Grünkörper wird in Folgeschritten dann zunächst während 8 Stunden bei einer Temperatur von 1000 °C unter einer inerten Atmosphäre, die zu mindestens 99, 9 Gew.-% Stickstoff umfasst thermisch behandelt (karbonisiert), und anschließend mit Imprägnierpech imprägniert und bei einer Temperatur von 1000 °C während 8 Stunden unter einer inerten Atmosphäre, die zu mindestens 99,9 Gew.-% Stickstoff umfasst, nochmals gebrannt.

Zur Nachverdichtung können beispielsweise auch duroplastische Harz mit hohen Kohlenstoffausbeuten verwendet werden, die insbesondere aus der Gruppe der Phenolharze stammen. Versuche mit Pechen und daraus abgeleiteten Derivaten zeigen ebenfalls gute Ergebnisse. Die Anzahl der durchzuführenden Nachverdichtungen ist abhängig von der gewünschten Zieldichte der Kohlenstofffaser verstärkten Kohlenstoffkeramik, wird jedoch bis zur viermal durchgeführt, wodurch Dichten von 1,30 -1,58 ± 0,03 g/cm³ erreicht werden.

Die in der vorstehend beschriebenen Weise erzielte Kohlenstofffaser verstärkte Kohlenstoffkeramik wurde nach einem anschließend durchgeführtem Erhitzen bei 2000°C während 8 Stunden in einer Inertgasatmosphäre charakterisiert. **Fig. 4** zeigt diese Kohlenstofffaser verstärkte Kohlenstoffkeramik. Die erzielten Eigenschaften sind in Tabelle 1 zusammengestellt.

**Tabelle 1: Eigenschaftsübersicht der gemäß Beispiel 1 hergestellten Kohlenstofffaser verstärkten Kohlenstoffkeramik**

| | | Orientierung | |
|---|---|---|---|
| Eigenschaft | Einheit | 0° (Probe 1) | 45° (Probe 2) |
| Dichte | [g/cm³] | 1,47 | 1,47 |
| Biegefestigkeit | [MPa] | 127,3 | 52,0 |
| Interlaminare Schubfestigkeit | [MPa] | 5,6 | 5,0 |
| Spez. Elektr. Widerstand | [Ohm µm] | 26,0 | 27,0 |

Bei den Proben 1 und 2 handelt es jeweils sich um rechteckige Probenstücke, die aus dem Verbundwerkstoff herausgeschnitten wurden. Probe 1 weist Längskanten auf, die parallel zur Faserrichtung verlaufen, während Probe 2 Längskanten aufweist, welche unter 45° zur Faserrichtung verlaufen.

### Beispiel 2: Veränderung der Zugfestigkeit einer prä-oxidierten Polyacrylnitrilfaser bei Erhitzen auf 2000 °C

Die nachstehende Tabelle vergleicht die Zugfestigkeit von PAN-Ox- Garn (Garn aus prä-oxidierter Polyacrylnitrilfaser) (Bezeichnung des Garns: Nm25/2, erhältlich über SGL Goup, Meitingen, Deutschland), das zur Herstellung eines erfindungsgemäßen Fasergeleges eingesetzt werden kann, vor und nach einer Behandlung bei 2000 °C. Bei dieser Behandlung wurde das Garn unter einer inerten Atmosphäre bei einem Druck von 1013 hPa und bei einer Temperatur von 20 °C, wobei die inerte Atmosphäre 99,9 Gew.-% an Stickstoff umfasst, bezogen auf das Gesamtgewicht der inerten Atmosphäre, während 12 Stunden auf 2000°C erhitzt. Nach Erreichen von 2000 °C wurde die Temperatur während 8 Stunden konstant gehalten. Anschließend erfolgte ein Abkühlen während 20 Stunden auf 20 °C.

**Tabelle 2**

| Behandlung | Metergewicht [g/m] | Höchstzugkraft [N] | Zugfestigkeit [MPa] |
|---|---|---|---|
| unbehandelt | 0,080 | 7,2 | 124 |
| Behandlung bei 2000°C | 0,034 | 8,2 | 435 |

| | | | |
|---|---|---|---|
| Die Ermittlung der Höchstzugkraft und der Zugfestigkeit ("tensile strength") erfolgte nach ASTM D3379-75. | | | |

Überraschenderweise zeigt sich, dass sowohl die Höchstzugkraft, als auch die Zugfestigkeit des PAN-Ox-Garn nach der Temperaturbehandlung zunahm. Dies zeigt, dass Garn, das Vorstufenfasern von Kohlenstofffasern umfasst oder hieraus besteht, insbesondere Garn, das PAN-Ox umfasst, sich sehr gut als Anbringungsfaden zur Herstellung erfindungsgemäßer Verbundwerkstoffe und Fasergelege eignet.

## Patentansprüche

1. Verfahren zur Herstellung eines Fasergelege-verstärkten Verbundwerkstoffs, welches umfasst:
a) Bereitstellen eines Fasergeleges, welches umfasst,
Bereitstellen einer Anordnung von zwei oder mehr Faserlagen, die teilweise oder vollständig übereinander angeordnet sind, wobei eine oder mehrere Faserlagen, bezogen auf das Gesamtgewicht der jeweiligen Faserlage, zu mindestens 50 Gew.-% Fasern ausgewählt aus der Gruppe bestehend aus, Kohlenstofffasern, Vorstufenfasern von Kohlenstofffasern, Keramikfasern und deren Gemischen umfassen;
Anbringen mindestens einer Faserlage an einer oder mehreren weiteren Faserlagen mit einem Anbringungsbindefaden,
wobei das Anbringen umfasst, dass der Anbringungsbindefaden durch die mindestens eine Faserlage und durch mindestens eine der einen oder mehreren weiteren Faserlagen hindurchgeführt wird;
wobei der Anbringungsbindefaden eine oder mehrere Fasern umfasst, ausgewählt aus der Gruppe, bestehend aus Kohlenstofffasern, Kohlenstofffaser-Vorstufenfasern, Keramikfasern und deren Gemischen;
b) Hochtemperatur-Behandeln des Fasergeleges bei einer Temperatur von mindestens 400 °C unter einer inerten Atmosphäre während eines Hochtemperatur-Behandlungszeitraums;
c) Imprägnieren des Hochtemperatur-behandelten Fasergeleges mit mindestens einem Binder;
d) Härten des imprägnierten Fasergeleges während eines Aushärtezeitraums bei einer Aushärtetemperatur von mindestens 40 °C, und optional Pressen mindestens eines Oberflächenabschnitts mindestens einer Oberfläche des imprägnierten Fasergeleges vor Beginn und/oder zumindest während eines Teils des Aushärtezeitraums, wobei ein Fasergelege-verstärkter Verbundwerkstoff gebildet wird; und
e) optional Gewinnen nach dem Schritt des Härtens und optionalen Pressens eines Fasergelege-verstärkten Verbundwerkstoffs oder Verbundwerkstoffprodukts.

2. Verfahren nach Anspruch 1, welches weiter umfasst,
thermisches Behandeln des Fasergelege-verstärkten Verbundwerkstoffs oder Verbundwerkstoffprodukts, und
optional Gewinnen eines thermisch behandelten Fasergelege-verstärkten Verbundwerkstoffs oder Verbundwerkstoffprodukts nach dem Schritt des thermischen Behandelns.

3. Verfahren nach Anspruch 2, welches weiter umfasst,
Nachverdichten und/oder Silizieren und/oder Gasphasenbeschichten des thermisch behandelten Fasergelege-verstärkten Verbundwerkstoffs oder Verbundwerkstoffprodukts, und
optional Gewinnen eines nachverdichteten und/oder silizierten und/oder gasphasenbeschichteten Fasergelege-verstärkten Verbundwerkstoffs oder Verbundwerkstoffprodukts nach dem Schritt des Nachverdichtens und/oder Silizierens und/oder Gasphasenbeschichtens.

4. Verfahren nach einem der vorstehenden Ansprüche, wobei das Anbringen ein Vernähen ist.

5. Verfahren nach einem der vorstehenden Ansprüche, wobei mindestens eine Faserlage zu mehr als 70 Gew.-%, vorzugsweise zu mehr als 85 Gew.-%, bevorzugt zu mehr als 92 Gew.-%, insbesondere zu mehr als 98 Gew.-% aus Fasern besteht, die ausgewählt sind aus der Gruppe, bestehend aus Kohlenstofffasern, Vorstufenfasern von Kohlenstofffasern, Keramikfasern und deren Gemischen, bezogen auf das Gesamtgewicht der jeweiligen Faserlage.

6. Verfahren nach einem der vorstehenden Ansprüche, wobei ein Anbringungsbindefaden verwendet wird, bei dem die Summe der Gehalte von C, Si, B, N, Al, Zr, Ti, W mehr als 50 Gew.-%, vorzugsweise mehr als 83 Gew.-%, bevorzugt mehr als 85 Gew.-%, insbesondere mehr als 95 Gew.-% des Gesamtgewichts des Anbringungsbindefadens beträgt, wobei der Gehalt an einem oder mehreren von C, Si, B, N, Al, Zr, Ti, W 0 Gew.-% betragen kann.

7. Verfahren nach einem der vorstehenden Ansprüche, wobei der Anbringungsbindefaden zumindest vor dem Anbringen zumindest teilweise oder vollständig von einem Anbringungsfluid umhüllt ist.

8. Verfahren nach einem der vorstehenden Ansprüche, wobei das Anbringen umfasst, dass der Anbringungsbindefaden bei einer ersten Eintrittsstelle auf einer ersten Faserlage eintritt, durch die erste Faserlage und mindestens eine weitere Faserlage hindurchgeführt wird und bei einer ersten Austrittsstelle auf der mindestens einen weiteren Faserlage austritt, und optional
bei einer zweiten Eintrittsstelle auf der mindestens einen weiteren Faserlage eintritt und durch mindestens eine weitere Faserlage und die erste Faserlage hindurchgeführt wird und bei einer zweiten Austrittsstelle auf der ersten Faserlage austritt.

9. Verfahren nach einem der vorstehenden Ansprüche, wobei die eine oder mehreren Kohlenstofffaser-Vorstufenfasern des Anbringungsfadens ausgewählt sind, aus der Gruppe, bestehend aus prä-oxidierten Textilfasern, prä-oxidierten Viskosefasern, prä-oxidierten Polyacrylnitril-Fasern, Phenolharzfasern, Pech-basierenden Vorstufenfasern und deren Gemischen.

10. Verfahren nach einem der vorstehenden Ansprüche, wobei die eine oder mehreren Keramikfasern des Anbringungsfadens ausgewählt sind, aus der Gruppe, bestehend aus, Basaltfasern, Fasern auf Basis von Si, C, B, N, Al oder Verbindungen davon, Glasfasern, Fasern auf Basis von Aluminiumoxid, Fasern auf Basis von Zirkonoxid, Fasern auf Basis von TiC, Fasern auf Basis von WC und deren Gemischen, wobei die eine oder mehreren Keramikfasern vorzugsweise ausgewählt sind, aus der Gruppe, bestehend aus, Basaltfasern, Fasern, umfassend oder bestehend aus, SiNC, SiBNC, SiC, B₄C, BN, Si₃N₄, Aluminiumoxid, Zirkonoxid, TiC, WC und deren Gemischen, und Gemische hiervon.

11. Verfahren nach einem der vorstehenden Ansprüche, wobei mindestens eine Faserlage ein flächenbezogenes Gewicht in einem Bereich von 50 g/m² bis 500 g/m², vorzugsweise in einem Bereich von 150 g/m² bis 350 g/m² , insbesondere von mindestens 305 g/m² bis 500 g/m² aufweist.

12. Verfahren nach einem der vorstehenden Ansprüche, wobei mindestens eine Faserlage eine Anzahl an Filamenten in einem Bereich von 0,5 K (500 Filamente) bis zu 500 K (500 000 Filamente), vorzugsweise in einem Bereich von 1 K (1000 Filamente) bis zu 400 K (400 000 Filamente), bevorzugt in einem Bereich von 12 K (12 000 Filamente) bis zu 60 K (60 000 Filamente) aufweist.

13. Verfahren nach einem der vorstehenden Ansprüche, wobei der Binder ein oder mehrere Harze und/oder ein oder mehrere anorganische Imprägniermittel umfasst,
wobei vorzugsweise das eine oder die mehreren Harze ausgewählt ist, aus der Gruppe, bestehend aus Phenol-Harzen, Epoxid-Harzen, Benzoxazin-Harzen, Cyanatester-Harzen, Polyester-/Vinylester-Harzen, Polyimidharzen, Furan-Harzen, Polyacrylat-Harzen und deren Gemischen, und/oder
wobei vorzugsweise das eine oder die mehreren anorganischen Imprägniermittel ausgewählt ist, aus der Gruppe, bestehend aus Silizium, SiC-Precursor-Polymeren, SiC-Precursor-Oligomeren und deren Gemischen.

14. Verfahren nach einem der vorstehenden Ansprüche, wobei mindestens eine, vorzugsweise alle Faserlagen unidirektionale Lagen sind.

15. Verfahren nach einem der vorstehenden Ansprüche 7 bis 14, wobei das Anbringungsfluid eine oder mehrere Verbindungen, ausgewählt aus der Gruppe, bestehend aus, Wasser, Silikonölen, Polyurethanen, Epoxidharzverbindungen, insbesondere Epoxyester, Polyvinylalkoholen, Wachsen, Fettsäureestern, Polyurethanestern, Polyurethanethern, sowie Gemische hiervon, umfasst.

16. Verfahren nach einem der vorstehenden Ansprüche, wobei der Anbringungsbindefaden eine Feinheit von nicht mehr als 1 Tex, vorzugsweise eine Feinheit im Bereich von 0,04 bis 1 Tex, bevorzugt eine Feinheit im Bereich von 0,04 bis 0,75 Tex aufweist, bestimmt nach DIN 60905.

17. Fasergelege-verstärktes Verbundwerkstoffprodukt oder Fasergelege-verstärkter Verbundwerkstoff, erhältlich nach einem Verfahren gemäß Anspruch 1 und 4 bis 16, wenn diese nicht von Anspruch 2 oder 3 abhängig sind.

18. Thermisch behandeltes Fasergelege-verstärktes Verbundwerkstoffprodukt oder thermisch behandelter Fasergelege-verstärkter Verbundwerkstoff, erhältlich nach einem Verfahren nach einem der Ansprüche 2 und 4 bis 16, wenn diese nicht von Anspruch 3 abhängig sind.

19. Nachverdichtetes und/oder siliziertes und/oder gasphasenbeschichtetes Fasergelege-verstärktes Verbundwerkstoffprodukt oder nachverdichteter und/oder silizierter und/oder gasphasenbeschichteter Fasergelege-verstärkter Verbundwerkstoff, erhältlich nach einem Verfahren nach einem der Ansprüche 3 bis 16.

20. Fasergelege, erhältlich nach einem Verfahren, welches umfasst:
a) Bereitstellen eines Fasergeleges, welches umfasst,
Bereitstellen einer Anordnung von zwei oder mehr Faserlagen, die teilweise oder vollständig übereinander angeordnet sind, wobei eine oder mehrere Faserlagen bezogen auf das Gesamtgewicht der jeweiligen Faserlage zu mindestens 50 Gew.-% Fasern ausgewählt aus der Gruppe bestehend aus, Kohlenstofffasern, Vorstufenfasern von Kohlenstofffasern, Keramikfasern und deren Gemischen umfassen,
Anbringen mindestens einer Faserlage an einer oder mehreren weiteren Faserlagen mit einem Anbringungsbindefaden,
wobei das Anbringen umfasst, dass der Anbringungsbindefaden durch die mindestens eine Faserlage und durch mindestens eine der einen oder mehreren weiteren Faserlagen hindurchgeführt wird,
wobei der Anbringungsbindefaden eine oder mehrere Fasern umfasst, ausgewählt aus der Gruppe, bestehend aus Kohlenstofffasern, Kohlenstofffaser-Vorstufenfasern, Keramikfasern und deren Gemischen;
b) Hochtemperatur-Behandeln des Fasergeleges bei einer Temperatur von mindestens 400 °C unter einer inerten Atmosphäre während eines Hochtemperatur-Behandlungszeitraums.

21. Verwendung eines Verbundwerkstoffs oder Verbundwerkstoffprodukts nach einem der Ansprüche 17 bis 19 oder eines Fasergeleges nach Anspruch 20 zur Herstellung von Öfen, insbesondere zur Herstellung der Heizbereichauskleidung von Öfen, von Heizleitern, von chemischen Reaktionsvorrichtungen oder deren Elementen, und von Heißpressmatrizen.

22. Element oder Vorrichtung, umfassend einen Verbundwerkstoff oder ein Verbundwerkstoffprodukt nach einem der Ansprüche 17 bis 19 oder hieraus bestehend, vorzugsweise Element oder Vorrichtung, ausgewählt aus der Gruppe, bestehend aus, Öfen, insbesondere deren Innenauskleidung oder Heizbereichsauskleidung, Heizleitern, chemischen Reaktionsvorrichtungen oder Bauelementen hierfür, und Heißpressmatrizen.
